# EUROPEAN PATENT APPLICATION

(11) **EP 4 358 502 A1**
(43) Date of publication of application: **24.04.2024**
(21) Application number: 23789476.1
(22) Date of filing: 06.09.2023
(51) Int. Cl.: H04M 1/72454, H04M 1/02, H04M 1/72469, G06F 3/041, G06F 3/0484, G06F 3/0481

(54) **FOLDABLE ELECTRONIC DEVICE AND UTILIZATION METHOD OF FOLDABLE ELECTRONIC DEVICE**

(30) Priority: 06.09.2022 KR 20220112755; 17.10.2022 KR 20220132936
(71) Applicant: Samsung Electronics Co., Ltd., Suwon-si, Gyeonggi-do 16677 (KR)
(72) Inventor: LEE, Younsun, Gyeonggi-do 16677 (KR); KIM, Juyoung, Gyeonggi-do 16677 (KR); KIM, Changhwan, Gyeonggi-do 16677 (KR); MOON, Hyunjung, Gyeonggi-do 16677 (KR); BAE, Sungchan, Gyeonggi-do 16677 (KR)
(74) Representative: HGF
(86) International application number: PCT/KR2023/013360
(87) International publication number: WO 2024/054038

(57) **Abstract**

A processor of a foldable electronic device according to an embodiment of the disclosure may be configured to: display a user interface on a second display in a folded state of the foldable electronic device; detect a user input designated for content included in the user interface; display a visual cue corresponding to the content for which the user input is detected; detect whether the foldable electronic device is changed from the folded state of to an unfolded state by using the sensor module; and display the content corresponding to the visual cue on the first display when a state change of the foldable electronic device is completed. Various embodiments are possible.

## Description

### [Technical Field]

An embodiment of the disclosure relates to a foldable electronic device and a method for utilizing a foldable electronic device.

### [Background Art]

With advancement of digital technology, various types of electronic devices, such as a mobile communication terminal, a personal digital assistant (PDA), an electronic organizer, a smartphone, a tablet personal computer (PC), or a wearable device, are widely used. An electronic device may have a limited size for portability, and thus the size of a display is also limited. Accordingly, various types of electronic devices that provide a more expanded screen in the electronic devices through a multidisplay have been developed in recent years.

For example, an electronic device includes a plurality of displays to provide an expanded screen through a multidisplay. In another example, an electronic device is designed to provide various services for a user through a large screen, with a screen size gradually increasing in a display having a limited size. This electronic device may have a new form factor, such as a multi-display (e.g., dual-display) device (e.g., a foldable device, a rollable device, or a slidable device). The foldable device may include a foldable (or bendable) display (e.g., a foldable display or a flexible display), and may be used in a folded or unfolded state. A rollable device or a slidable device may include a flexible display, and may be stored with the flexible display rolled up on the rear side of the rollable device or may be used by extending the flexible display to the front side of the rollable device.

### [Disclosure of Invention]

An embodiment may disclose a method and a device that displays a visual cue corresponding to content for which a designated user input is detected when the designated user input for the content is detected displayed on a first display in a foldable electronic device having at least two displays and displays the content corresponding to the visual cue on a second display according to a state change (e.g., closed state ↔ open state) of the foldable electronic device.

A foldable electronic device (101) according to an embodiment of the disclosure may include a first housing (210) and a second housing (220) configured to be disposed on opposite sides with respect to a folding axis and formed to be foldable with respect to each other between a folded state and an unfolded state of the foldable electronic device; a first display (230) configured to be disposed to face a first direction when the foldable electronic device is in the unfolded state; a second display (240) configured to be disposed to face a second direction, which is an opposite direction to the first direction, when the foldable electronic device is in the unfolded state, a sensor module (176), and a processor (120) configured to be operatively connected to the first display, the second display, or the sensor module, wherein the processor may be configured to: display a user interface on the second display in the folded state of the foldable electronic device, detect a user input designated for content included in the user interface, display a visual cue corresponding to the content for which the user input is detected, detect whether the foldable electronic device is changed from the folded state of to the unfolded state by using the sensor module, and display the content corresponding to the visual cue on the first display in response to detecting that the foldable electronic device is changed from the folded state to the unfolded state.

An operating method of a foldable electronic device (101) including a first housing (210) and a second housing (220) disposed on opposite sides with respect to a folding axis and formed to be foldable with respect to each other between a folded state and an unfolded state of the foldable electronic device) is provided, the method comprising according to an embodiment of the disclosure may include displaying a user interface on a second display (240) disposed to face a second direction, in the folded state of the foldable electronic device, detecting a user input designated for content included in the user interface, displaying a visual cue corresponding to the content for which the user input is detected; detecting whether the foldable electronic device is changed from the folded state of to the unfolded state by using a sensor module (176) of the electronic device; and displaying the content corresponding to the visual cue on a first display (230) disposed to face the first direction opposite to the second direction, in case that a state of the foldable electronic device is changed from the folded state to the unfolded state.

According to an embodiment, when a user input designated for content displayed on a first display is detected, a visual cue is displayed on the content for which the designated user input is detected, and a second display is activated instead of the first display according to a state change of the foldable electronic device, the content corresponding to the visual cue may be displayed on the second display.

According to an embodiment, when information about content for which a designated user input is detected is stored in advance, and then an activated display is changed, the content stored in advance may be automatically displayed on a changed display, thereby improving user convenience.

According to an embodiment, in a foldable electronic device having at least two displays, an application displayed on a first display and an application displayed on a second display may be different.

According to an embodiment, in a foldable electronic device having at least two displays, with respect to content for which a designated user input is detected, a visual cue corresponding to the content may be displayed on a first display, and the content may be displayed on a second display.

It will be appreciated that the content corresponding to the visual cue and displayed on the first display may be exactly the same as the content displayed on, and selected via, the second display, but in certain embodiments it may be different in some way. The second display may display content related to an app, for example, but when the foldable electronic device is unfolded, the first display may display more extensive content associated with that app. Advantageously, by displaying the visual cue on the second screen before the state of the device is changed from the folded state to the unfolded state, the user is provided with an indication of what content will be automatically displayed on the first screen when the device is unfolded. The user thus has the opportunity to review, and perhaps change, the selected or designated app and/or contents before unfolding the device, and this has the technical effect of reducing power consumption and reducing processing that would otherwise result from unfolding the device without prior indication of content, displaying unwanted content on the first screen, and then having to provide further inputs to the first screen to change the displayed contents to the desired contents.

In certain embodiments, when the device is in the folded state, the second screen may display a plurality of selectable items on a user interface. Then, in response to detecting a user input (to the user interface) selecting one of those items, the device may display a visual cue on the interface, that visual cue indicating the selected item. The visual cue may be displayed on, or close to, the selected item. Then, in response to the state of the device being changed from the folded state to the unfolded state, the first screen automatically displays content and/or a further user interface corresponding to the selected item. Thus, the visual cue provides the user with an advance indication (i.e. before the device is unfolded) of what will be displayed on the first screen when the device is unfolded. The user can change the selected item before unfolding the device, so that when the device is unfolded it automatically displays the desired interface/content. In certain embodiments, the selected item may be an icon or other graphic entity corresponding to a particular app (application). When the device is unfolded, the particular app may be automatically launched (e.g. by the processor) and a user interface and/or content corresponding to the particular app may be displayed on the first screen.

### [Brief Description of Drawings]

FIG. 1 is a block diagram of an electronic device in a network environment according to an embodiment;
FIG. 2A illustrates an unfolded state of a foldable electronic device according to an embodiment;
FIG. 2B illustrates a folded state of a foldable electronic device according to an embodiment;
FIG. 2C illustrates an intermediate state or an unfolded state of a foldable electronic device according to an embodiment;
FIG. 3 illustrates an example in which a foldable electronic device displays content and a visual cue corresponding to the content according to an embodiment;
FIG. 4 is a flowchart illustrating an operating method of a foldable electronic device according to an embodiment;
FIG. 5A and FIG. 5B illustrate an example of a designated user input of a foldable electronic device according to an embodiment;
FIG. 6 is a flowchart illustrating a method of modifying a content list in a foldable electronic device according to an embodiment;
FIG. 7A and FIG. 7B illustrate an example of modifying a content list in a foldable electronic device according to an embodiment;
FIG. 8A to FIG. 8C illustrate an example of selecting content according to a designated user input in a foldable electronic device according to an embodiment;
FIG. 9A to FIG. 9C illustrate an example of selecting content according to a designated user input in a foldable electronic device according to an embodiment;
FIG. 10 is a flowchart illustrating a method of providing content in a multiwindow when a state of a foldable electronic device is changed according to an embodiment;
FIG. 11A and FIG. 11B illustrate an example of providing content in a multiwindow in a foldable electronic device according to an embodiment;
FIG. 12A to FIG. 12C illustrate an example of providing updated content in a foldable electronic device according to an embodiment; and
FIG. 13A and FIG. 13B illustrate an example of deleting displayed content from a content list in a foldable electronic device according to an embodiment.

### [Mode for the Invention]

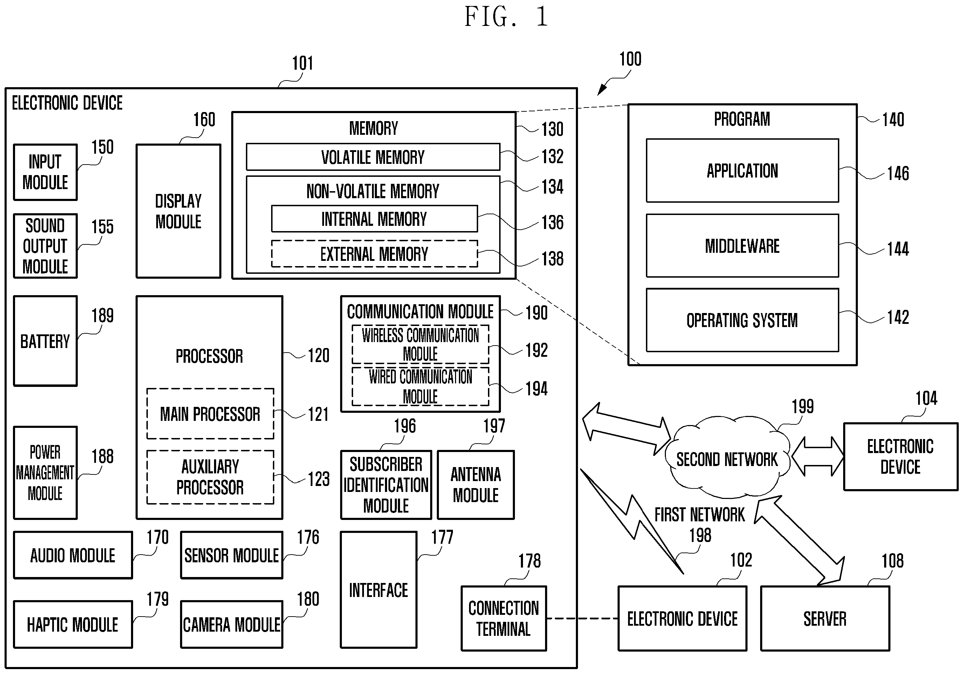

Fig. 1 is a block diagram illustrating an electronic device 101 in a network environment 100 according to certain embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5th generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4th generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to certain embodiments, the antenna module 197 may form a mmWave antenna module. According to an embodiment, the mmWave antenna module may include a printed circuit board, an RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to certain embodiments may be one of various types of electronic devices. The electronic devices may include, for example, a portable communication device (e.g., a smart phone), a computer device, a portable multimedia device, a portable medical device, a camera, a wearable device, or a home appliance. According to an embodiment of the disclosure, the electronic devices are not limited to those described above.

It should be appreciated that certain embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Certain embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to certain embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to certain embodiments, each component (e.g., a module or a program) of the above-described components may include a single entity or multiple entities, and some of the multiple entities may be separately disposed in different components. According to certain embodiments, one or more of the above-described components may be omitted, or one or more other components may be added. Alternatively or additionally, a plurality of components (e.g., modules or programs) may be integrated into a single component. In such a case, according to certain embodiments, the integrated component may still perform one or more functions of each of the plurality of components in the same or similar manner as they are performed by a corresponding one of the plurality of components before the integration. According to certain embodiments, operations performed by the module, the program, or another component may be carried out sequentially, in parallel, repeatedly, or heuristically, or one or more of the operations may be executed in a different order or omitted, or one or more other operations may be added.

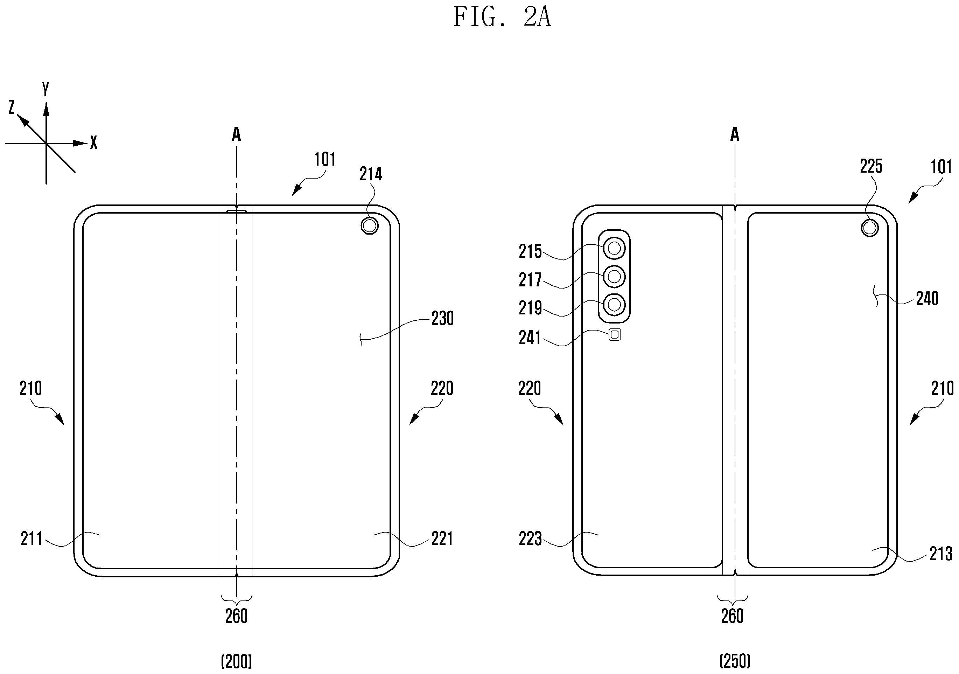

FIG. 2A is a view illustrating a foldable electronic device according to various embodiments in an unfolded state. Referring to FIG. 2A, a foldable electronic device (e.g., the electronic device 101 in FIG. 1) according to various embodiments may include a first housing 210 including a first surface 211 and a third surface 213 and a second housing 220 including a second surface 221 and a fourth surface 223. The first surface 211 of the first housing 210 and the second surface 221 of the second housing 220 may be the front surface 200 of the electronic device 101, and the third surface 213 of the first housing 210 and the fourth surface 223 of the second housing 220 may be the rear surface 250 of the electronic device 101.

The first housing 210 and the second housing 220 may be disposed on opposite sides with reference to a folding axis (e.g., axis A), and may have a generally symmetrical shape with respect to the folding axis. For example, in the front surface 200 of the electronic device 101, with reference to the folding axis, the first housing 210 may be on the left side of the electronic device 101, and the second housing 220 may be on the right side of the electronic device 101. The first housing 210 and the second housing 220 may be designed to be folded relative to each other. A hinge structure 260 is provided between the first housing 210 and the second housing 220 so that the front surface 200 of the electronic device 101 is foldable.

The angle or distance between the first housing 210 and the second housing 220 may vary depending on whether the electronic device 101 is in an unfolded (or open) state, a folded (or closed) state, or an intermediate state. For example, the unfolded state may refer to an open state or a flat state. The unfolded state is a state in which the first housing 210 and the second housing 220 are arranged side by side, and may mean a state in which the electronic device 101 is fully unfolded. In the unfolded state, the angle between the first housing 210 and the second housing 220 is 180 degrees, and the first surface 211 of the first housing 210 and the second surface of the second housing 220 may be disposed to be oriented in the same direction (e.g., the first direction). FIG. 2A is a view illustrating the front surface 200 of the electronic device 101 and the rear surface 250 of the electronic device 101 in the state in which the electronic device 101 is unfolded.

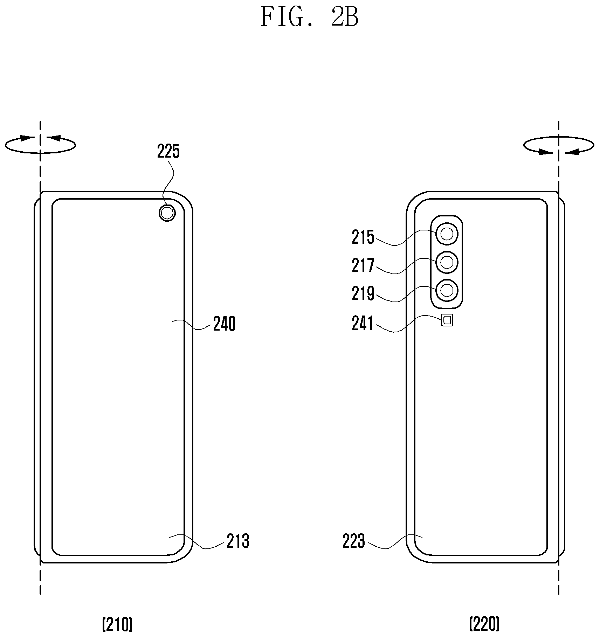

The folded state may refer to a closed state (see FIG. 2B). The folded state is a state in which the first housing 210 and the second housing 220 are disposed to face each other, and may refer to a state in which the electronic device 101 is fully folded. In the folded state, the first housing 210 and the second housing 220 form a narrow angle (e.g., 0 degrees to 5 degrees) therebetween, and the first surface 211 of the first housing 210 and the second surface 221 of the second housing 220 may face each other. Regarding a folding type, the electronic device 101 which is implemented in an in-folding type will be described below, but the electronic device 101 may also be implemented in an out-folding type in the same or similar manner.

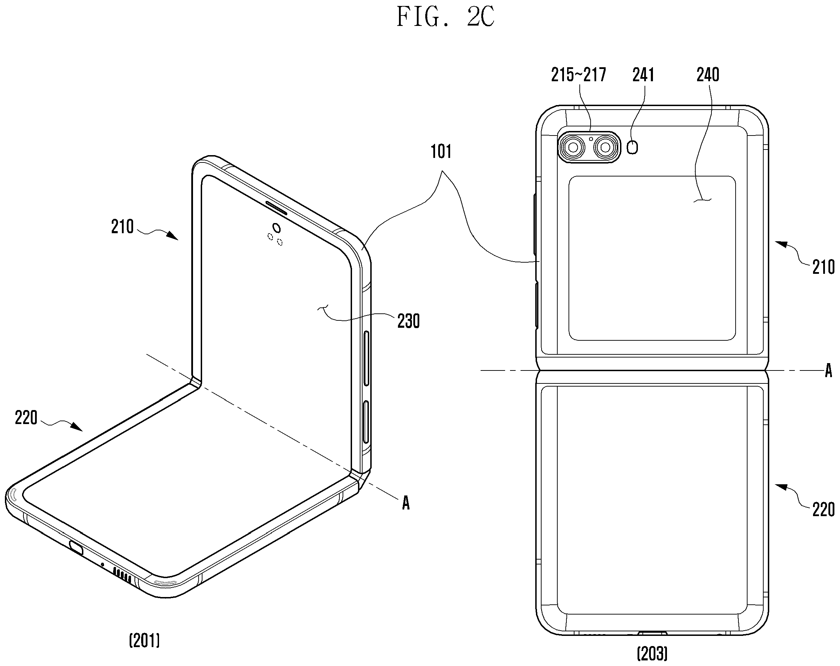

The intermediate state is a state in which the first housing 210 and the second housing 220 are disposed at a predetermined angle (or disposed at an angle within a predetermined range of angles) relative to each other, and the electronic device 101 may be neither in the unfolded state nor in the folded state (see FIG. 2C). The intermediate state may refer to a state in which the first surface 211 of the first housing 210 and the second surface 221 of the second housing 220 form a predetermined angle (e.g., 6 degrees to 179 degrees) therebetween.

The electronic device 101 may be provided with a first display 230 (e.g., a main display) (e.g., the display module 160 in FIG. 1) on the first surface 211 and the second surface 221, which correspond to the front surface 200 of the electronic device. The first display 230 may be provided on the entire front surface 200 (e.g., in the first direction of the electronic device 101). The first display 230 may be a flexible display in which at least a partial region is deformable into a flat surface or a curved surface. The first display 230 may be folded left and right with reference to the folding axis (e.g., axis A). The first display 230 may include a first display region corresponding to the first surface 211 and/or a second display region corresponding to the second surface 221. In addition, the electronic device 101 may include a first camera 214 disposed on the second surface 221. The drawing illustrates a single first camera 214, but a plurality of first cameras 214 may be provided. Although the drawing illustrates that the first camera 214 is disposed on the second surface 221, the first camera 214 may be provided on the first surface 211.

In addition, the electronic device 101 may be provided with a second display 240 (e.g., a sub-display or a cover display) (e.g., the display module 160 in FIG. 1) in a portion of the rear surface 250 thereof. The second display 240 may be provided in at least a portion of the third surface 213 of the electronic device 101. The electronic device 101 may include a plurality of cameras (e.g., 215, 217, 219, and 225) on the rear surface 250 thereof. For example, in the electronic device 101, a second camera 215, a third camera 217, and a fourth camera 219 may be disposed on the fourth surface 223, and a fifth camera 225 may be disposed on the third surface 213. According to various embodiments, the performance (e.g., angle of view, resolution) of the second camera 215, the third camera 217, the fourth camera 219, and the fifth camera 225 may be the same or different. For example, the second camera 215 may have an angle of view greater than 125 degrees (e.g., an ultra-wide angle of view), the third camera 217 may have an angle of view of 90 to 125 degrees (e.g., a wide angle of view), the fourth camera 219 may have an angle of view of 90 degrees with a 2x zoom function (e.g., a telescopic function), and the fifth camera 225 may have an angle of view of 90 degrees with a normal magnification. The electronic device 101 may further include a sensor region 241 on the fourth surface 223. Similar to the sensor module 176 of FIG. 1, an infrared sensor, a fingerprint sensor, or an illuminance sensor may be disposed in the sensor region 241.

According to various embodiments, when the electronic device 101 is in the unfolded state (see FIG. 2A), the first display 230 may be turned on (or activated) and the second display 240 may be turned off (or inactivated). When a user input (e.g., a touch or button selection) is not detected for a predetermined period of time (e.g., 5 seconds, 10 seconds, or 1 minute) while the first display 230 is turned on, the electronic device 101 may turn off the first display 230. Alternatively, when a user input (e.g., a touch or button selection) is detected in the second display 240 while the second display 240 is turned off, the electronic device 101 may turn on the second display 240. According to various embodiments, when the second display 240 is turned on, the first display 230 may be turned off. Alternatively, even when the second display 240 is turned on, the electronic device 101 may maintain the first display 230 in the ON state for a predetermined period of time, and then when a user input is not detected on the first display 230 even after a predetermined period of time has elapsed, the electronic device 101 may turn off the first display 230.

The electronic device 101 may further include a sensor module (e.g., the sensor module 176 in FIG. 1) on the front surface 200 of the electronic device 101. For example, the electronic device 101 may include the sensor module 176 in at least one of the first housing 210 and the second housing 220. The sensor module 176 may include at least one of an acceleration sensor, a gyroscope sensor, a geomagnetic sensor, a proximity sensor, an illuminance sensor, a gesture sensor, or a hall sensor. The acceleration sensor is a sensor that detects a speed, and the gyroscope sensor may detect an angular velocity that is a rotation speed of an object. The geomagnetic sensor is a sensor that detects geomagnetism, and like a compass, the geomagnetic sensor may detect geomagnetism directions (e.g., azimuth) such as east, west, south, and north. The proximity sensor detects whether an object is present close thereto, the illuminance sensor can measure the amount of ambient light (e.g., illuminance) in real time or periodically, and the gesture sensor may detect infrared rays. The Hall sensor may detect a change in an electrical signal based on proximity or distance of an object having a magnetic force (i.e. having an associated magnetic field). When the Hall sensor is used to detect the folded state of the electronic device 101, the electronic device 101 may further include a magnet corresponding to the Hall sensor. For example, the magnet may be arranged such that when the device is in the folded state, the magnet is close to, or next to, the Hall sensor, which detects the magnet's magnetic field, and when the device is unfolded, the magnet may be moved away from the Hall sensor such that the Hall sensor no longer detects the magnet's magnetic field (or at least detects a much lower magnetic flux density).

FIG. 2B is a view illustrating a foldable electronic device according to various embodiments in the folded state.

Referring to FIG. 2B, in the electronic device 101, a hinge structure 260 may be provided around the folding axis (e.g., axis A) so that the front surface 200 of the electronic device 101 may be in the folded state (e.g., a closed state). FIG. 2B is a view illustrating the third surface 213 of the first housing 210 and the fourth surface 223 of the second housing 220 when the electronic device 101 is in the folded state.

According to various embodiments, when the electronic device 101 is in the folded state, the first display 230 may be turned off and the second display 240 may be turned on. When a user input is not detected for a predetermined period of time while the second display 240 is turned on, the electronic device 101 may turn off the second display 240. While the electronic device 101 is in the folded state and the second display 240 is turned off, the electronic device 101 may turn on the second display 240 when a button provided (or mounted) on the electronic device 101 is selected. Alternatively, while the electronic device 101 is in the folded state, when a user input is detected on the second display 240 after the second display 240 is turned off, the electronic device 101 may turn on the second display 240.

FIG. 2C illustrates an intermediate state or an unfolded state of a foldable electronic device according to various embodiments.

The foldable electronic devices of FIG. 2A and FIG. 2B are examples of an electronic device having two parallel sides (e.g., top and bottom sides or left and right sides) of similar lengths, and a foldable electronic device of FIG. 2C is an example of an electronic device in which a first length of two parallel sides (e.g., top and bottom sides) is longer or shorter than a second length of the other two sides (e.g., left and right sides). The foldable electronic devices of FIG. 2A and FIG. 2B and the foldable electronic device of FIG. 2C may be the same or similar in structure or operation except for an external appearance of an electronic device.

Referring to FIG. 2C, the electronic device 101 may be in an intermediate state 201 in which a hinge structure 260 is formed on a folding axis (e.g., an axis A) so that a first housing 210 and a second housing 220 form an angle. For example, in the intermediate state 201, one surface of the first housing 210 or the second housing 220 is placed on a floor (or other flat surface), and the second housing 220 placed on the floor and the first housing 210 not placed on the floor may form an angle. The drawing illustrates a state in which a fourth surface 223 of the second housing 220 is placed on the floor, and a first surface 211 of the first housing 210 and a second surface 221 of the second housing 220 form an angle.

According to various embodiments, in the intermediate state 201, a first display 230 may be activated, and thus a user interface may be displayed on the first display 230. The user interface may be displayed on an entire screen of the first display 230, or may be divided into two parts (or areas) to be displayed like a split screen. Alternatively, in the intermediate state, an output unit (e.g., an application execution screen) may be displayed on the first surface 211 of the first housing 210, and an input unit (e.g., a keypad) may be displayed on the second surface 221 of the second housing 220.

Referring to a rear surface 203, a cover display (e.g., the display module 160 of FIG. 1 or the second display 240 of FIG. 2A to FIG. 2C) may be included in a portion of the rear surface 203 on a third surface 213 of the first housing 210 of the electronic device 101. A plurality of cameras 215 to 217 and a sensor area 241 may be further included next to the second display 240.

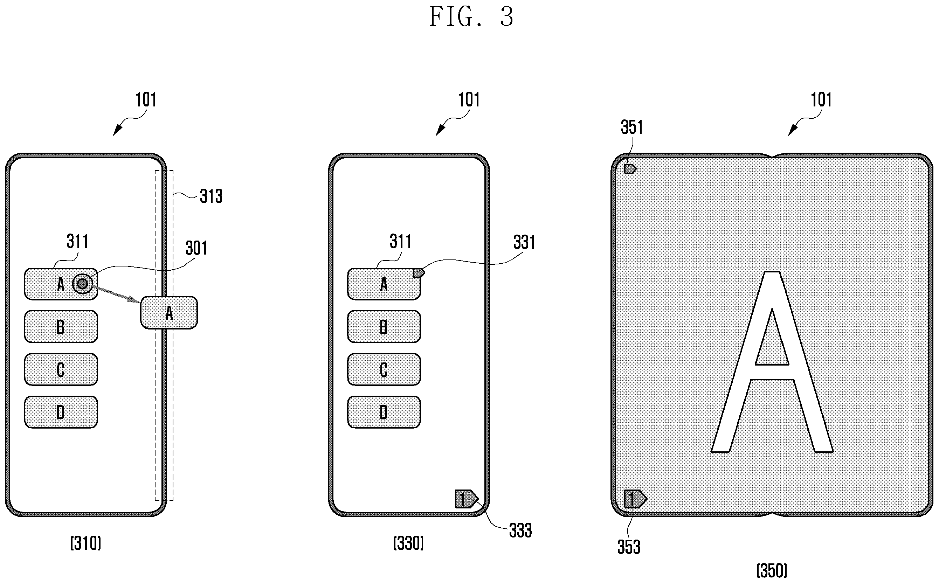

FIG. 3 illustrates an example in which a foldable electronic device displays content and a visual cue corresponding to the content according to an embodiment.

Referring to FIG. 3, a foldable electronic device (e.g., the electronic device 101 of FIG. 1) according to an embodiment may detect a user input 301 designated for at least one content A 311 while displaying a first user interface 310. The foldable electronic device 101 may include a first housing (e.g., the first housing 210 of FIG. 2A to FIG. 2C) including a first surface (e.g., the first surface 211 of FIG. 2A to FIG. 2C) and a third surface (e.g., the third surface 213 of FIG. 2A to FIG. 2C) and a second housing (e.g., the second housing 220 of FIG. 2A to FIG. 2C) including a second surface (e.g., the second surface 221 in FIG. 2A to FIG. 2C) and a fourth surface (e.g., the fourth surface 223 of FIG. 2A to FIG. 2C). A first display (e.g., the first display 230 of FIG. 2A to FIG. 2C) may be disposed on a front surface (e.g., the front surface 200 of FIG. 2A) of the foldable electronic device 101, and a second display (e.g., the second display 240 of FIG. 2A to FIG. 2C) may be disposed on one surface (e.g., the second surface 213) of a rear surface (e.g., the rear surface 250 of FIG. 2A) of the foldable electronic device 101.

The foldable electronic device 101 may be in a folded state while displaying the first user interface 310. The foldable electronic device 101 may display the first user interface 310 on the second display 240 in the folded state. The folded state may refer to a bent state, a folding state, or a closed state (e.g., FIG. 2B). The folded state is a state in which the first housing 210 and the second housing 220 are disposed to face each other, and may refer to a state in which the foldable electronic device 101 is completely folded. In the folded state, the first housing 210 and the second housing 220 form a narrow angle (e.g., 0 degrees to 5 degrees), and the first surface 211 of the first housing 210 and the second surface 221 of the second housing 220 may face each other.

At least one content may be displayed on the first user interface 310. The at least one content may be at least one of text, an image, or a video. For example, the at least one content may include an execution screen of an application or content having a URL attribute. The designated user input 301 may refer to selecting (e.g., long-pressing) the content 311 by a user and moving (e.g., dragging and dropping) the selected content 311 to a designated area 313. Although the designated area 313 is shown as a right edge in the drawing, the designated area 313 may be at least one of upper, lower, left, and right edges of the electronic device 101 (or, in alternative embodiments may be a designated area anywhere on the second display). When the designated user input 301 is detected, the foldable electronic device 101 may display a second user interface 330.

The second user interface 330 may display a visual cue 331 for the content 311 (or, in other words, corresponding to the content 311) for which the designated user input 301 is detected, and may display visual cue information 333. The visual cue 331 may be for notifying the user of the content to be displayed when a state of the foldable electronic device 101 is changed. The visual cue information 333 may indicate the number of contents configured with visual cues. The visual cue 331 or the visual cue information 333 may be provided as text (e.g., a number) and/or an image (e.g., an icon). In the drawing, since one visual cue 331 is configured, the visual cue information 333 may be displayed as ' 1'.

A state change of the foldable electronic device 101 may be a change from the folded state to an unfolded state. The unfolded state is a state in which the first housing 210 and the second housing 220 are disposed side by side, and may refer to a state in which the foldable electronic device 101 is completely unfolded. In the unfolded state, the first housing 210 and the second housing 220 form an angle of 180 degrees (or an angle close to 180 degrees, e.g. within a predetermined range of 180 degrees, such as between 175 and 185 degrees), and the first surface 211 of the first housing 210 and the second surface 221 of the second housing 220 may be disposed to face the same direction (e.g., a first direction) (e.g., FIG. 2A).

According to an embodiment, when the foldable electronic device 101 is in the folded state, the second display 240 may be activated (e.g., on), and when the foldable electronic device 101 is in the unfolded state, the first display 230 may be activated. For example, when the second display 240 is activated in the folded state, the first display 230 may be deactivated (e.g., off). When the first display 230 is activated in the unfolded state, the second display 240 may be deactivated. In the disclosure, "the state change of the foldable electronic device 101" may refer to a change of a display. The user may use the second display 240 when the foldable electronic device 101 is in the folded state, and then use the first display 230 when the foldable electronic device 101 is changed to the unfolded state. Alternatively, the user may use the first display 230 when the foldable electronic device 101 is in the unfolded state, and then use the second display 240 when the foldable electronic device 101 is changed to the folded state.

When the foldable electronic device 101 is changed from the folded state to the unfolded state, a third user interface 350 may be displayed. The foldable electronic device 101 may be in the unfolded state while displaying the third user interface 350. The foldable electronic device 101 may display the third user interface 350 on the first display 230 in the unfolded state. The third user interface 350 may include the content 311 selected through the first user interface 310, a visual cue 351, and visual cue information 353. The visual cue 351 and the visual cue information 353 included in the third user interface 350 may be the same as or similar to the visual cue 331 and the visual cue information 333 included in the second user interface 330.

A foldable electronic device (e.g., the electronic device 101 of FIG. 1) according to an embodiment of the disclosure may include a first housing (e.g., the first housing 210 of FIG. 2A to FIG. 2C) and a second housing (e.g., the second housing 220 of FIG. 2A to FIG. 2C) configured to be disposed on opposite sides with respect to a folding axis and formed to be folded to each other, a first display (e.g., the display 230 of FIG. 2A to FIG. 2C) configured to be disposed to face a first direction of the first housing and the second housing, a second display (e.g., the second display 240 of FIG. 2A to FIG. 2C) configured to be disposed to face a second direction, which is an opposite direction of the first direction of any one of the first housing or the second housing, a sensor module (e.g., the sensor module 176 of FIG. 1), a memory (e.g., the memory 130 of FIG. 1), and a processor (e.g., the processor 120 of FIG. 1) configured to be operatively connected to the first display, the second display, the sensor module, or the memory, wherein the processor may be configured to: display a user interface on the second display in a folded state of the foldable electronic device; detect a user input designated for content included in the user interface; display a visual cue corresponding to the content for which the user input is detected; detect whether the foldable electronic device is changed from the folded state of to an unfolded state by using the sensor module; and display the content corresponding to the visual cue on the first display when a state change of the foldable electronic device is completed.

The processor may be configured to display visual cue information corresponding to the visual cue, and the visual cue information may indicate a number of contents for which the visual cue is configured.

The processor may be configured to change and display the visual cue information when a second visual cue is configured for new content in a state in which a first visual cue is configured.

The processor may be configured to display a content list including at least one content for which the visual cue is configured when the visual cue information is selected.

The processor may be configured to: detect a user input for content included in the content list; and modify the content list, based on the detected user input.

The processor may be configured to: allocate a display priority for content configured based on time when there is a plurality of contents for which the visual cue is configured; and display the content for which the display priority is allocated among the contents for which the visual cue is configured when the state change of the foldable electronic device is completed.

The processor may be configured to: determine whether a multiwindow priority is configured in a configuration value of the foldable electronic device; and display the content corresponding to the visual cue in a multiwindow on the first display when the multiwindow priority is configured.

The processor may be configured to: display the same application for which the visual cue is configured in the multiwindow; or display different applications for which the visual cue is configured in the multiwindow.

The processor may be configured to: provide a drag affordance corresponding to the selected content when a user input to select the content is detected; and determine that a designated user input is entered when a user input to move the drag affordance to a designated area is detected.

The processor may be configured to: detect whether the foldable electronic device is changed from the unfolded state to the folded state after displaying the content corresponding to the visual cue on the first display; and change visual cue information corresponding to the visual cue when the foldable electronic device changes from the unfolded state to the folded state.

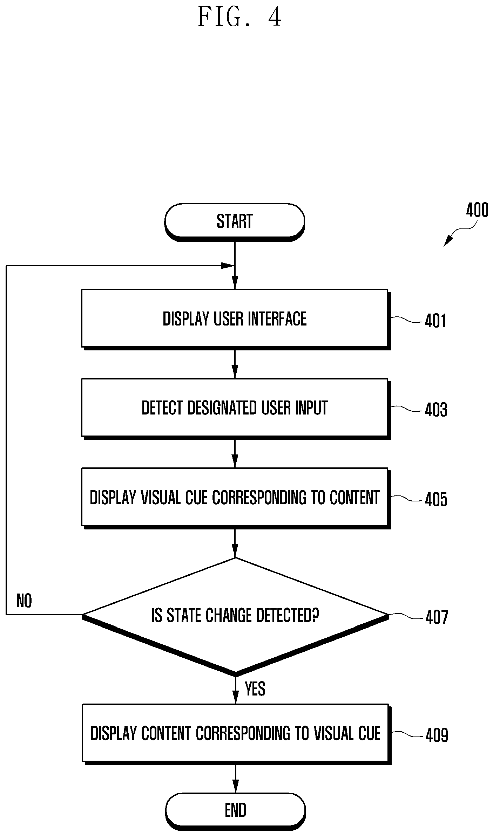

FIG. 4 is a flowchart 400 illustrating an operating method of a foldable electronic device according to an embodiment.

Referring to FIG. 4, in operation 401, a processor (e.g., the processor 120 of FIG. 1) of a foldable electronic device (e.g., the electronic device 101 of FIG. 1) according to an embodiment may display a user interface. The user interface may display at least one content. The at least one content may be displayed on the user interface. The at least one content may be at least one of text, an image, or a video. For example, the at least one content may include an application execution screen or content having a URL attribute.

The foldable electronic device 101 may include a first housing (e.g., the first housing 210 of FIG. 2A to FIG. 2C) including a first surface (e.g., the first surface 211 of FIG. 2A to FIG. 2C) and a third surface (e.g., the third surface 213 of FIG. 2A to FIG. 2C) and a second housing (e.g., the second housing 220 of FIG. 2A to FIG. 2C) including a second surface (e.g., the second surface 221 in FIG. 2A to FIG. 2C) and a fourth surface (e.g., the fourth surface 223 of FIG. 2A to FIG. 2C). A first display (e.g., the first display 230 of FIG. 2A to FIG. 2C) may be disposed on a front surface (e.g., the front surface 200 of FIG. 2A) of the foldable electronic device 101, and a second display (e.g., the second display 240 of FIG. 2A to FIG. 2C) may be disposed on one surface (e.g., the second surface 213) of a rear surface (e.g., the rear surface 250 of FIG. 2A) of the foldable electronic device 101.

For example, in operation 401, the processor 120 may display the user interface (e.g., the first user interface 310 of FIG. 3) on the second display 240 in the folded state. The folded state may refer to a bent state, a folding state, or a closed state (e.g., FIG. 2B). The folded state is a state in which the first housing 210 and the second housing 220 are disposed to face each other, and may refer to a state in which the foldable electronic device 101 is completely folded. In the folded state, the first housing 210 and the second housing 220 form a narrow angle (e.g., 0 degrees to 5 degrees), and the first surface 211 of the first housing 210 and the second surface 221 of the second housing 220 may face each other.

Alternatively, in operation 401, the processor 120 may display the user interface on the first display 230 in an unfolded state. The unfolded state is a state in which the first housing 210 and the second housing 220 are disposed side by side, and may refer to a state in which the foldable electronic device 101 is completely unfolded. In the unfolded state, the first housing 210 and the second housing 220 form an angle of 180 degrees, and the first surface 211 of the first housing 210 and the second surface 221 of the second housing 220 may be disposed to face the same direction (e.g., a first direction) (e.g., FIG. 2A).

Hereinafter, the processor 120 will be described as displaying the user interface on the second display 240 in the folded state in operation 401. However, the disclosure is not limited by this description.

In operation 403, the processor 120 may detect a designated user input. The designated user input may refer to selecting (e.g., long-pressing) content and moving the selected content to a designated area. Alternatively, the designated user input may be a user selecting content and dragging and dropping the selected content in a designated direction. The designated user input may be variously configured according to a configuration of the foldable electronic device 101. The foregoing examples are only for a better understanding of the disclosure, and the disclosure is not limited by this description. The processor 120 may detect the designated user input while displaying the user interface in the folded state.

In operation 405, the processor 120 may display a visual cue corresponding to content. The processor 120 may display a visual cue for content for which the designated user input is detected on the second display 240. The visual cue may notify the user (i.e. it may give the user a visual indication) of the content to be displayed when a state of the foldable electronic device 101 is changed. The processor 120 may display visual cue information corresponding to the visual cue. The visual cue information may, for example, indicate the number of contents configured with visual cues. The visual cue or the visual cue information may be provided as text (e.g., a number) and/or an image (e.g., an icon).

A state change of the foldable electronic device 101 may refer to a change from the folded state to the unfolded state or a change from the unfolded state to the folded state. Since operation 401 and operation 405 are performed in the folded state, the state change of the foldable electronic device 101 may refer to the change from the folded state to the unfolded state. The state change of the foldable electronic device 101 may also refer to a change of a display. When the foldable electronic device 101 is in the folded state, the second display 240 may be activated, and when the foldable electronic device 101 is in the unfolded state, the first display 230 may be activated.

In operation 407, the processor 120 may detect the state change of the foldable electronic device 101. The foldable electronic device 101 may include a sensor module (e.g., the sensor module 176 of FIG. 1) in at least one of the first housing 210 or the second housing 220. The processor 120 may determine whether the foldable electronic device 101 is changed from the folded state to the unfolded state by using the sensor module 176.

When the state change of the foldable electronic device 101 is detected, the processor 120 may perform operation 409, and when the state change of the foldable electronic device 101 is not detected, the processor 120 may return to operation 401. The processor 120 may return to operation 401, and may provide a visual cue upon detecting a designated user input while displaying the user interface. For example, the processor 120 may provide a visual cue for a plurality of contents included in one application, based on the designated user input. Alternatively, the processor 120 may provide visual cues respectively for a plurality of contents included in a plurality of applications, based on the designated user input.

When the state change of the foldable electronic device 101 is detected, the processor 120 may display the content corresponding to the visual cue in operation 409. In operation 409, the foldable electronic device 101 is in a state of being completely changed to the unfolded state. When the state change of the foldable electronic device 101 is completed (e.g., folded state → unfolded state), the processor 120 may deactivate the second display 240, and may activate the first display 230. The processor 120 may display the content corresponding to the visual cue on the first display 230 in the unfolded state of the foldable electronic device 101. Further, the processor 120 may display a visual cue and visual cue information in the displayed content. In operation 409, the displayed visual cue and visual cue information may be the same as or similar to the visual cue and visual cue information displayed in operation 405.

According to an embodiment, when there is a plurality of contents for which visual cues are configured, the processor 120 may allocate a display priority, based on a time at which the visual cues are configured. For example, when visual cues are configured for three contents, the processor 120 may preferentially display one piece of content for which a visual cue has been most recently configured. Alternatively, when the state of the foldable electronic device 101 is changed, the processor 120 may simultaneously display at least two contents in a multiwindow.

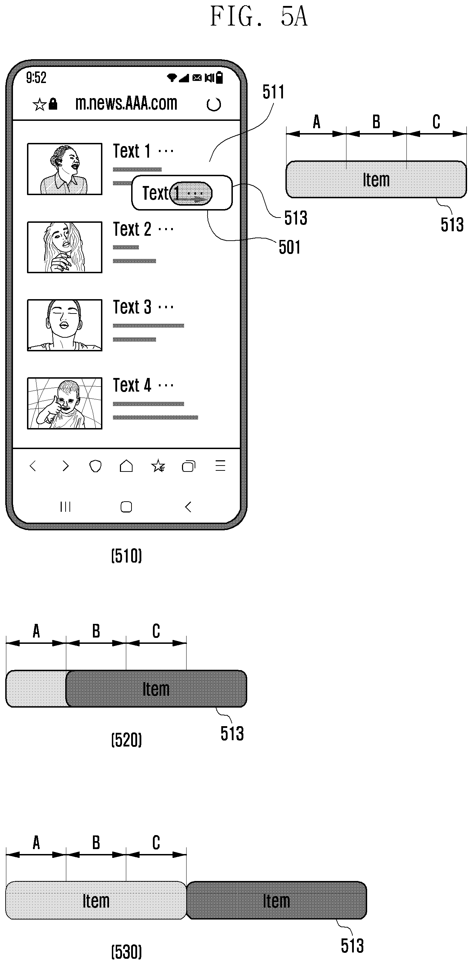

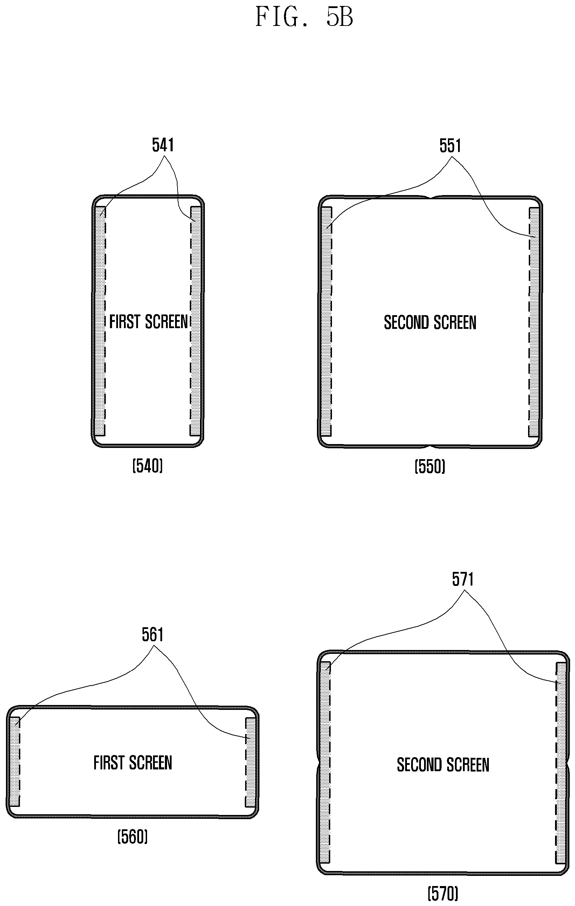

FIG. 5A and FIG. 5B illustrate an example of a designated user input of a foldable electronic device according to an embodiment.

Referring to FIG. 5A, a processor (e.g., the processor 120 of FIG. 1) of a foldable electronic device (e.g., the electronic device 101 of FIG. 1) according to an embodiment may detect a user input 501 designated for at least a piece of one content 511 while displaying a first user interface 510. The designated user input 501 may be a long pressing of (or on) the content 511 and dragging and dropping the content 511 in a designated direction (for example by using acceleration). When the content 511 is long pressed (e.g. when it is touched, and the touch maintained for a predetermined length of time), the processor 120 may provide a drag affordance 513 (which may also be described as a drag guide, or visual drag or dragging guide) corresponding to the content. The drag affordance 513 may refer to providing selected content in a pop-up form. The processor 120 may determine that the designated user input 501 is detected when acceleration occurs in the designated direction with respect to the drag affordance 513. For example, when an area of the drag affordance 513 is divided into three equal parts (e.g., A, B, and C) and the drag affordance 513 moves in the designated direction (e.g., a right direction), if a speed 530 at which the drag affordance 513 moves by the length of areas B and C is higher than a speed 520 at which the drag affordance 513 moves by the length of area A, the processor 120 may determine that acceleration has occurred. Thus, the drag affordance or drag guide 513 may be a portion (or feature) of the user interface that is displayed in response to a long press of the selected content 511 and with which the user interacts (by providing an input to the drag affordance). The drag affordance in certain embodiments provides the user with an indication of the direction in which their touch input to the screen/user interface should be moved (e.g. dragged or flicked) in order to select the touched content 511 as the content for which a visual cue is then displayed.

Referring to FIG. 5B, the designated direction may be a direction of movement to a designated area (e.g., an edge) of the user foldable electronic device 101. For example, when the foldable electronic device 101 is in a portrait mode, the processor 120 may provide a second user interface 540 in a folded state, and may provide a third user interface 550 in an unfolded state. A designated area 541 in the second user interface 540 and a designated area 551 in the third user interface 550 may be opposite edges. When the foldable electronic device 101 is in a landscape mode, the processor 120 may provide a fourth user interface 560 in the folded state, and may provide a fifth user interface 570 in the unfolded state. A designated area 561 in the fourth user interface 560 and a designated area 571 in the fifth user interface 570 may be opposite edges.

The foregoing example is only for a better understanding of the disclosure, and the disclosure is not limited by this description. For example, the designated area of the foldable electronic device 101 may be top/bottom edges of the foldable electronic device 101, or corners of the foldable electronic device 101 instead of opposite edges. In alternative embodiments, the designated area may be anywhere on the currently displayed screen. The drag affordance may be arranged to provide the user with an indication of the direction in which to move their long press towards the designated area, wherever that designated area is, in the particular embodiment.

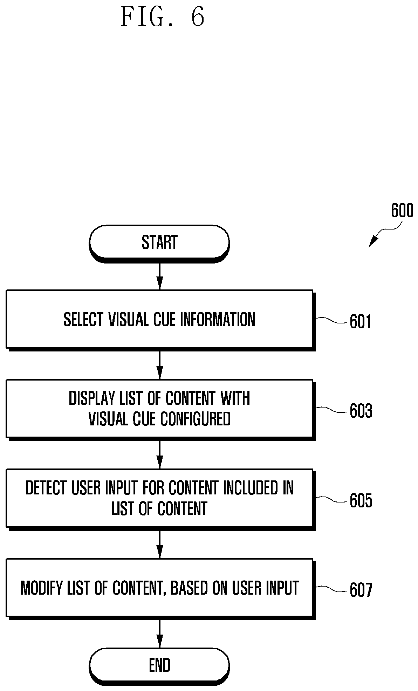

FIG. 6 is a flowchart 600 illustrating a method of modifying a content list in a foldable electronic device according to an embodiment.

Referring to FIG. 6, in operation 601, a processor (e.g., the processor 120 of FIG. 1) of a foldable electronic device (e.g., the electronic device 101 of FIG. 1) according to an embodiment may select visual cue information. The visual cue information may indicate the number of contents configured with visual cues. The visual cue may be for notifying a user of content to be displayed when a state of the foldable electronic device 101 is changed. Selecting the visual cue information may be the user touching (e.g., tapping) the visual cue information.

The foldable electronic device 101 may include a first housing (e.g., the first housing 210 of FIG. 2A to FIG. 2C) including a first surface (e.g., the first surface 211 of FIG. 2A to FIG. 2C) and a third surface (e.g., the third surface 213 of FIG. 2A to FIG. 2C) and a second housing (e.g., the second housing 220 of FIG. 2A to FIG. 2C) including a second surface (e.g., the second surface 221 in FIG. 2A to FIG. 2C) and a fourth surface (e.g., the fourth surface 223 of FIG. 2A to FIG. 2C). A first display (e.g., the first display 230 of FIG. 2A to FIG. 2C) may be disposed on a front surface (e.g., the front surface 200 of FIG. 2A) of the foldable electronic device 101, and a second display (e.g., the second display 240 of FIG. 2A to FIG. 2C) may be disposed on one surface (e.g., the second surface 213) of a rear surface (e.g., the rear surface 250 of FIG. 2A) of the foldable electronic device 101.

A state change of the foldable electronic device 101 may refer to a change from a folded state to an unfolded state or a change from the unfolded state to the folded state. The folded state may refer to a bent state, a folding state, or a closed state (e.g., FIG. 2B). The folded state is a state in which the first housing 210 and the second housing 220 are disposed to face each other, and may refer to a state in which the foldable electronic device 101 is completely folded. In the folded state, the first housing 210 and the second housing 220 form a narrow angle (e.g., 0 degrees to 5 degrees), and the first surface 211 of the first housing 210 and the second surface 221 of the second housing 220 may face each other.

The unfolded state is a state in which the first housing 210 and the second housing 220 are disposed side by side, and may refer to a state in which the foldable electronic device 101 is completely unfolded. In the unfolded state, the first housing 210 and the second housing 220 form an angle of 180 degrees, and the first surface 211 of the first housing 210 and the second surface 221 of the second housing 220 may be disposed to face the same direction (e.g., a first direction) (e.g., FIG. 2A).

For example, in operation 601, the processor 120 may display a user interface (e.g., the second user interface 330 of FIG. 3) on the second display 240 in the folded state. Alternatively, the processor 120 may display a user interface (e.g., the third user interface 330 of FIG. 3) on the first display 230 in the unfolded state.

In operation 603, the processor 120 may display a list of content with a visual cue configured. The list of content may include at least one content for which a visual cue is configured. For example, when there are three contents configured with visual cues, the processor 120 may display the three contents to be arranged in a matrix (e.g., horizontally and vertically), a horizontal direction, or a vertical direction. Each piece of content included in the list of content may be displayed as at least one of text and/or an image (e.g., an icon).

According to an embodiment, in the list of content, content for which a visual cue has been most recently configured may have a display priority. The processor 120 may display the content having the display priority to be distinguished from other content in the list of content. For example, when three contents are included in the content list, the processor 120 may preferentially display the content for which the visual cue has been most recently configure when the state of the foldable electronic device 101 is changed. Alternatively, the processor 120 may simultaneously display at least two contents in a multiwindow when the state of the foldable electronic device 101 is changed.

In operation 605, the processor 120 may detect a user input for content included in the list of content. For example, the processor 120 may detect a user input to select (e.g., touch or long press) content and to move the selected content to be out of an area where the list of content is displayed from the user. Alternatively, the processor 120 may detect a user input to select content and to move the selected content within the list of content from the user.

In operation 607, the processor 120 may modify the list of content, based on the user input. For example, when detecting a user input to move selected content to be out of the area where the list of content is displayed, the processor 120 may delete the selected content from the list of content. When the content is deleted from the list of content, the processor 120 may correct the number displayed in the visual cue information. For example, when one piece of content is deleted while '3' is displayed in the visual cue information, the processor 120 may modify the visual cue information to '2'. Alternatively, when detecting a user input to move selected content within the list of content, the processor 120 may move a position of the selected content within the list of content. The processor 120 may modify the content for which the display priority is configured according to movement of the position of the content. When a different piece of content is moved to the position of the content for which the display priority is configured, the processor 120 may allocate a display priority to the moved content, and may display the display priority in the list of content.

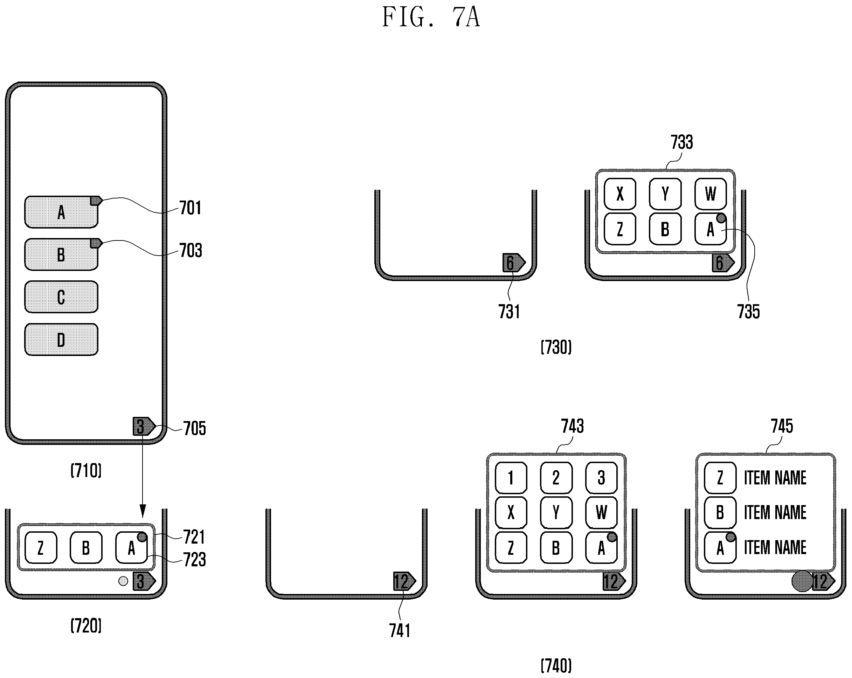

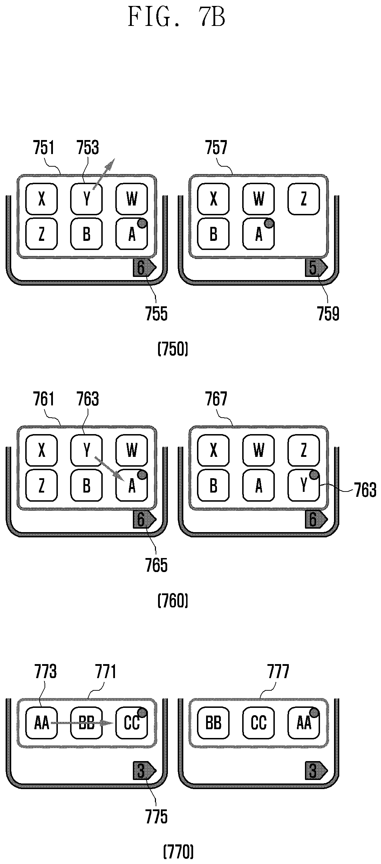

FIG. 7A and FIG. 7B illustrate an example of modifying a content list in a foldable electronic device according to an embodiment.

Referring to FIG. 7A, a processor (e.g., the processor 120 of FIG. 1) of a foldable electronic device (e.g., the electronic device 101 of FIG. 1) according to an embodiment may display a first user interface 710 in a folded state of the foldable electronic device 101. The foldable electronic device 101 may include a first housing (e.g., the first housing 210 of FIG. 2A to FIG. 2C) including a first surface (e.g., the first surface 211 of FIG. 2A to FIG. 2C) and a third surface (e.g., the third surface 213 of FIG. 2A to FIG. 2C) and a second housing (e.g., the second housing 220 of FIG. 2A to FIG. 2C) including a second surface (e.g., the second surface 221 in FIG. 2A to FIG. 2C) and a fourth surface (e.g., the fourth surface 223 of FIG. 2A to FIG. 2C). A first display (e.g., the first display 230 of FIG. 2A to FIG. 2C) may be disposed on a front surface (e.g., the front surface 200 of FIG. 2A) of the foldable electronic device 101, and a second display (e.g., the second display 240 of FIG. 2A to FIG. 2C) may be disposed on one surface (e.g., the second surface 213) of a rear surface (e.g., the rear surface 250 of FIG. 2A) of the foldable electronic device 101.

The folded state may refer to a bent state, a folding state, or a closed state (e.g., FIG. 2B). The folded state is a state in which the first housing 210 and the second housing 220 are disposed to face each other, and may refer to a state in which the foldable electronic device 101 is completely folded. In the folded state, the first housing 210 and the second housing 220 form a narrow angle (e.g., 0 degrees to 5 degrees), and the first surface 211 of the first housing 210 and the second surface 221 of the second housing 220 may face each other.

The processor 120 may display the first user interface 710 on the second display 240 in a folded state of the foldable electronic device 101. The first user interface 710 may include at least one content, and may display a first visual cue 701 corresponding to first content, a second visual cue 703 corresponding to second content, and visual cue information 705.

For example, when the visual cue information 705 is selected on the first user interface 710, the processor 120 may provide a content list. The content list may include at least one content (e.g., A, B, and Z) for which a visual cue is configured. The processor 120 may display a display priority for content for which a visual cue has been most recently configured in the content list.

For example, when there are three contents for which visual cues are configured, the processor 120 may provide a second user interface 720 including a first content list 721. The processor 120 may display content 723 (A) for which a display priority is configured to be distinguished from other content (e.g., B and Z) in the first content list 721.

Alternatively, when there are six contents for which visual cues are configured, the processor 120 may provide a third user interface 730 including a second content list 733. In the third user interface 730, visual cue information 731 may be indicated as '6', and the second content list 733 may be displayed when the visual cue information 731 is selected. The processor 120 may display content 735 (A) for which a display priority is configured to be distinguished from other content (e.g., B, Z, X, Y, and W) in the second content list 733.

Alternatively, when there are 12 contents for which visual cues are configured, the processor 120 may provide a fourth user interface 740 including a third content list 743. In the fourth user interface 740, visual cue information 741 may be indicated as '12', and the third content list 743 or a fourth content list 745 may be displayed when the visual cue information 741 is selected. The processor 120 may display content (e.g., A) for which a display priority is configured to be distinguished from other content (e.g., B, Z, X, Y, and W) in the third content list 743. The processor 120 may display the content (e.g., A) for which the display priority is configured to be distinguished from other content (e.g., B and Z) in the fourth content list 745. The processor 120 may further display other invisible content (e.g., X, Y, W), based on a user input to scroll the fourth content list 745. The processor 120 may display a plurality of contents to be arranged in a matrix (e.g., 743), the horizontal direction (e.g., 745), or the vertical direction in the content list.

Referring to FIG. 7B, the processor 120 may provide a fifth user interface 750 for modifying a content list, based on a user input. In the fifth user interface 750, visual cue information 755 may be indicated as '6', and a fourth content list 751 may be displayed when the visual cue information 755 is selected. The processor 120 may detect a user input to select at least one content 753 in the fourth content list 751 and to move the selected content 753 out of an area of the fourth content list 751. The processor 120 may delete the content 753 for which the user input is detected from the fourth content list 751. When the content 753 is deleted from the fourth content list 751, the processor 120 may modify the visual cue information into visual cue information 759 (e.g., 6 → 5), and may provide a content list 757 from which the content 753 has been deleted.

Alternatively, the processor 120 may provide a sixth user interface 760 for modifying a content list, based on a user input. In the sixth user interface 760, visual cue information 765 may be indicated as '6', and a fifth content list 761 may be displayed when the visual cue information 765 is selected. The processor 120 may detect a user input to select at least one content 763 in the fifth content list 761 and to move the selected content 763 within the fifth content list 761. The processor 120 may move the position of the content 763 for which the user input is detected to a position of content A for which a display priority is configured.

According to an embodiment, the processor 120 may modify the content for which the display priority is configured according to movement of the position of the content. The processor 120 may move the content A previously configured as the display priority to a side, and may allocate a display priority to the moved content 763. The processor 120 may remove a display priority mark from the content A, and may provide a display priority mark for the moved content 763 (Y).

In a seventh user interface 770, visual cue information 775 may be indicated as '3', and a sixth content list 771 may be displayed when the visual cue information 775 is selected. The processor 120 may detect a user input to select at least one content 773 (AA) in the sixth content list 771 and to move the selected content 773 within the sixth content list 771. The processor 120 may move the position of the content 773 for which the user input is detected to a position of content CC for which a display priority is configured. As the position of the content 773 is moved, the processor 120 may remove a display priority mark from the content CC, and may provide a display priority mark for the moved content 773.

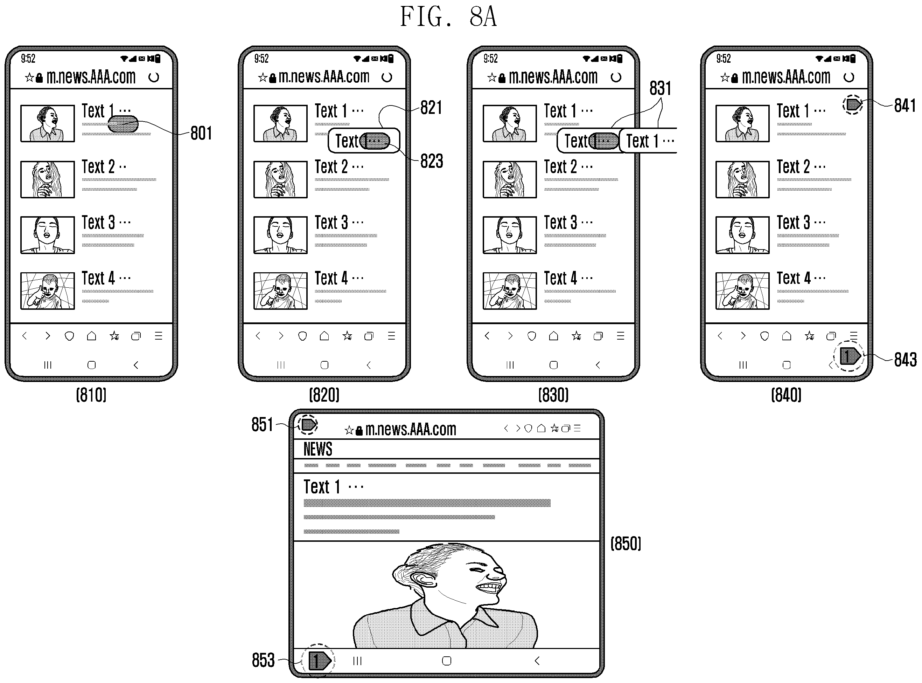

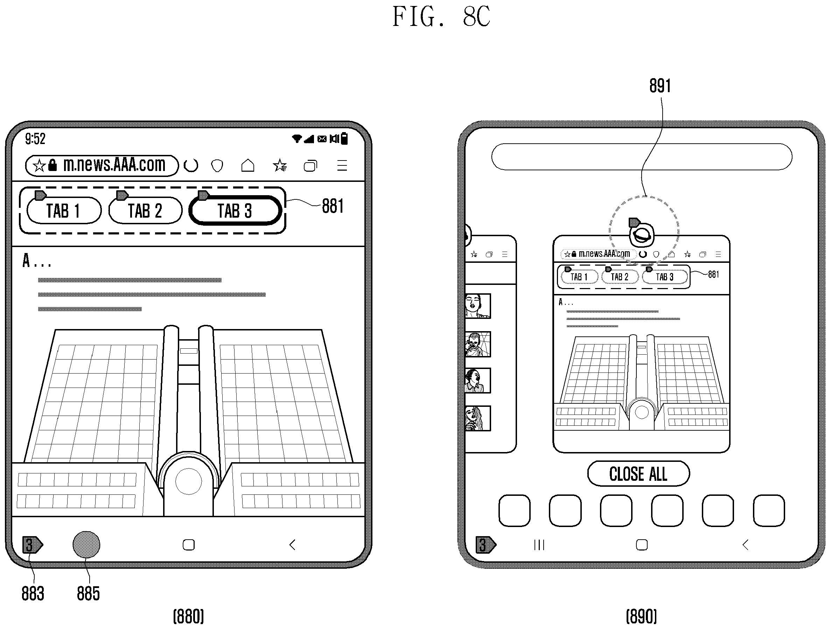

FIG. 8A to FIG. 8C illustrate an example of selecting content according to a designated user input in a foldable electronic device according to an embodiment.

Referring to FIG. 8A, a processor (e.g., the processor 120 of FIG. 1) of a foldable electronic device (e.g., the electronic device 101 of FIG. 1) according to an embodiment may display a first user interface 810 in a folded state. The foldable electronic device 101 may include a first housing (e.g., the first housing 210 of FIG. 2A to FIG. 2C) including a first surface (e.g., the first surface 211 of FIG. 2A to FIG. 2C) and a third surface (e.g., the third surface 213 of FIG. 2A to FIG. 2C) and a second housing (e.g., the second housing 220 of FIG. 2A to FIG. 2C) including a second surface (e.g., the second surface 221 in FIG. 2A to FIG. 2C) and a fourth surface (e.g., the fourth surface 223 of FIG. 2A to FIG. 2C). A first display (e.g., the first display 230 of FIG. 2A to FIG. 2C) may be disposed on a front surface (e.g., the front surface 200 of FIG. 2A) of the foldable electronic device 101, and a second display (e.g., the second display 240 of FIG. 2A to FIG. 2C) may be disposed on one surface (e.g., the second surface 213) of a rear surface (e.g., the rear surface 250 of FIG. 2A) of the foldable electronic device 101.

The folded state may refer to a bent state, a folding state, or a closed state (e.g., FIG. 2B). The folded state is a state in which the first housing 210 and the second housing 220 are disposed to face each other, and may refer to a state in which the foldable electronic device 101 is completely folded. In the folded state, the first housing 210 and the second housing 220 form a narrow angle (e.g., 0 degrees to 5 degrees), and the first surface 211 of the first housing 210 and the second surface 221 of the second housing 220 may face each other.

The processor 120 may display the first user interface 810 on the second display 240 in a folded state of the foldable electronic device 101. The first user interface 810 may include at least one content. The processor 120 may detect a user input 801 to select (e.g., long press) at least one content (e.g., a web page) while displaying the first user interface 810. When the user input 801 is detected, the processor 120 may provide a second user interface 820 that provides a drag affordance 821 corresponding to the selected content. The processor 120 may detect a user input 823 to move the drag affordance 821 in a designated direction (e.g., to an edge) while displaying the second user interface 820. The processor 120 may provide a third user interface 830 in which the drag affordance 831 moves to the edge. The third user interface 830 may display movement of the drag affordance 831 according to the user input.

When the user input is completed while displaying the third user interface 830, the processor 120 may provide a fourth user interface 840. The fourth user interface 840 may display a visual cue 841 corresponding to the selected content, and may include visual cue information 843. Since the fourth user interface 840 is an example in which one piece of content is configured with the visual cue 841, the visual cue information 843 may be indicated as ' 1'.

The processor 120 may display a fifth user interface 850 according to a state change of the foldable electronic device 101. The foldable electronic device 101 may include a sensor module (e.g., the sensor module 176 of FIG. 1) in at least one of the first housing 210 or the second housing 220. The processor 120 may determine whether the foldable electronic device 101 is changed from the folded state to an unfolded state by using the sensor module 176. For example, the state change of the foldable electronic device 101 may refer to a change from the folded state to the unfolded state. The state change of the foldable electronic device 101 may also refer to a change of a display. When the foldable electronic device 101 is in the folded state, the second display 240 may be activated, and when the foldable electronic device 101 is in the unfolded state, the first display 230 may be activated.

The processor 120 may display the fifth user interface 850 on the first display 230 when the foldable electronic device 101 is in the unfolded state. The fifth user interface 850 may display content configured with a visual cue, and may include the visual cue 851 and visual cue information 853.

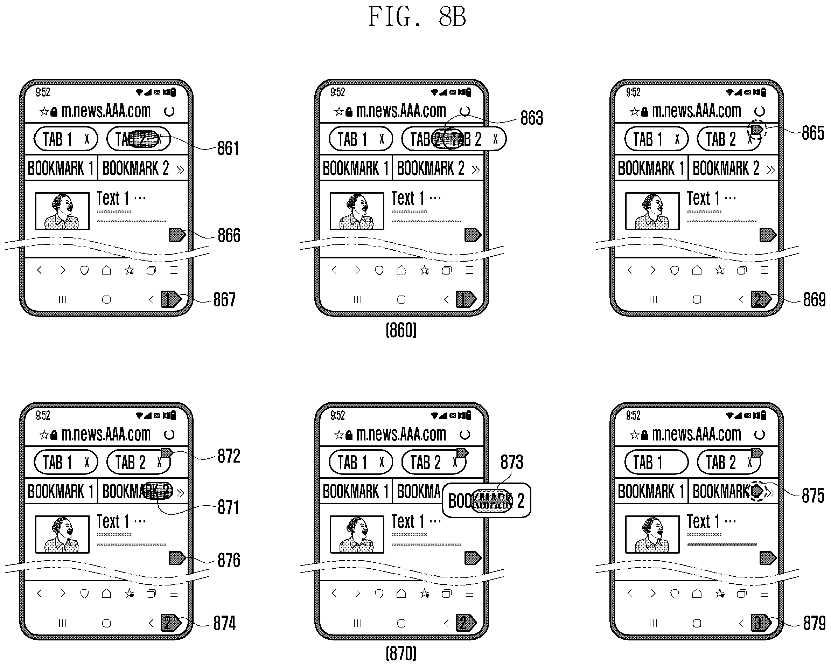

Referring to FIG. 8B, the processor 120 may display a sixth user interface 860 in the folded state. The sixth user interface 860 may include at least one content, and may include a visual cue 866 corresponding to first content and visual cue information 867. The processor 120 may detect a user input 861 to select at least one content (e.g., a tab included in a tab list of a web page) while displaying the sixth user interface 860. The processor 120 may provide a drag affordance for the content for which the user input 861 is detected, and may detect a user input 863 to move the drag affordance to a designated area (e.g., an edge). When the user input 863 is determined as a designated user input, the processor 120 may display a visual cue 865 for the selected content, and may modify the visual cue information. Since the number of contents for which visual cues are configured has increased, the processor 120 may display visual cue information 869 increased from '1' to '2'.

The processor 120 may display a seventh user interface 870 in the folded state. The seventh user interface 870 may include at least one content, and may include a first visual cue 872 corresponding to first content, a second visual cue 876 corresponding to second content, and visual cue information 874. The processor 120 may detect a user input 871 to select at least one content (e.g., a bookmark included in a bookmark bar of a web page) while displaying the seventh user interface 870. The processor 120 may provide a drag affordance for the content for which the user input 871 is detected, and may detect a user input 873 to move the drag affordance to a designated area (e.g., an edge). When the user input 873 is determined as a designated user input, the processor 120 may display a third visual cue 875 for the selected content, and may modify the visual cue information. Since the number of contents for which visual cues are configured has increased, the processor 120 may modify the visual cue information from '2' to '3', thereby displaying visual cue information 874.

The processor 120 may display an eighth user interface 880 according to the state change of the foldable electronic device 101. The processor 120 may determine whether the foldable electronic device 101 is changed from the folded state to the unfolded state by using the sensor module 176. The processor 120 may display the eighth user interface 880 on the first display 230 when the foldable electronic device 101 is in the unfolded state. The eighth user interface 880 may display content for which a visual cue has been most recently configured, a list 881 of content configured with a visual cue, and visual cue information 883. The processor 120 may detect a user input 885 to view a recent list while displaying the eighth user interface 880. When the user input 885 to view the recent list is detected, the processor 120 may provide a ninth user interface 890. The ninth user interface 890 may display an execution screen of an application currently being executed.

In the ninth user interface 890, execution screens of the same application may be listed in a tab form, or execution screens of different applications may be listed. The execution screen of the application may include an execution screen 891 of an application executed on the first display 230 and an execution screen of an application executed on the second display 240.

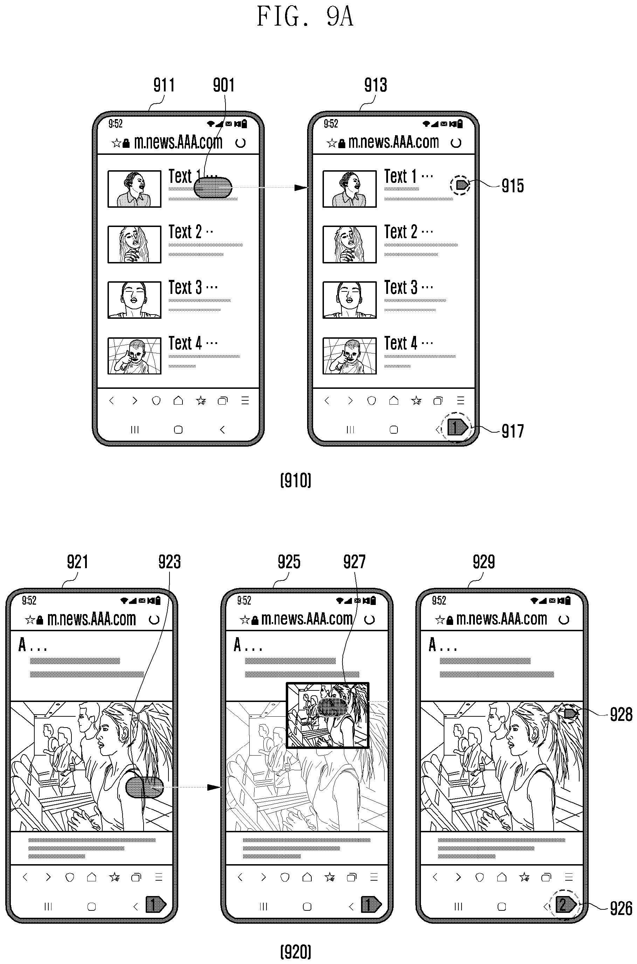

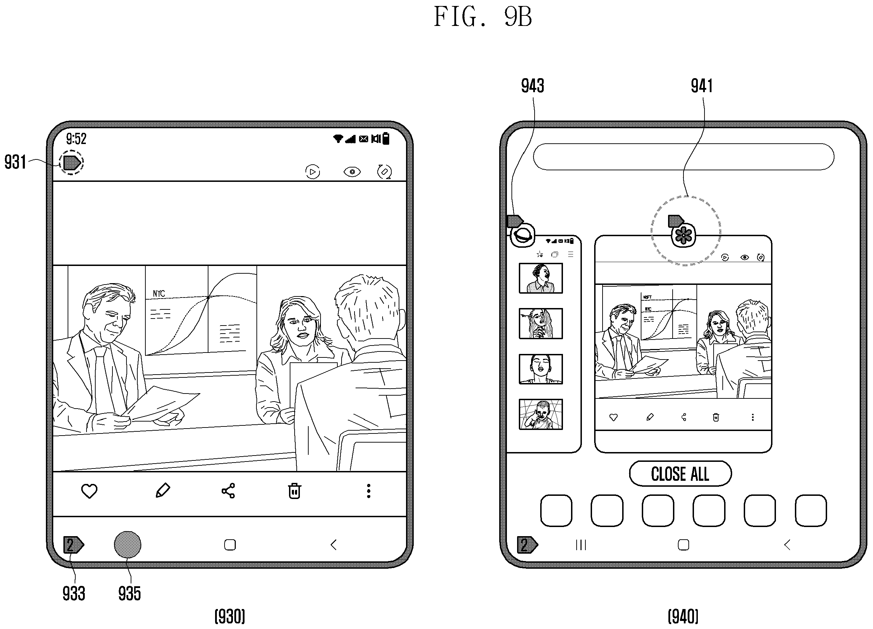

FIG. 9A to FIG. 9C illustrate an example of selecting content according to a designated user input in a foldable electronic device according to an embodiment.

Referring to FIG. 9A, a processor (e.g., the processor 120 of FIG. 1) of a foldable electronic device (e.g., the electronic device 101 of FIG. 1) according to an embodiment may display a first user interface 910 in a folded state. The foldable electronic device 101 may include a first housing (e.g., the first housing 210 of FIG. 2A to FIG. 2C) including a first surface (e.g., the first surface 211 of FIG. 2A to FIG. 2C) and a third surface (e.g., the third surface 213 of FIG. 2A to FIG. 2C) and a second housing (e.g., the second housing 220 of FIG. 2A to FIG. 2C) including a second surface (e.g., the second surface 221 in FIG. 2A to FIG. 2C) and a fourth surface (e.g., the fourth surface 223 of FIG. 2A to FIG. 2C). A first display (e.g., the first display 230 of FIG. 2A to FIG. 2C) may be disposed on a front surface (e.g., the front surface 200 of FIG. 2A) of the foldable electronic device 101, and a second display (e.g., the second display 240 of FIG. 2A to FIG. 2C) may be disposed on one surface (e.g., the second surface 213) of a rear surface (e.g., the rear surface 250 of FIG. 2A) of the foldable electronic device 101.

The folded state may refer to a bent state, a folding state, or a closed state (e.g., FIG. 2B). The folded state is a state in which the first housing 210 and the second housing 220 are disposed to face each other, and may refer to a state in which the foldable electronic device 101 is completely folded. In the folded state, the first housing 210 and the second housing 220 form a narrow angle (e.g., 0 degrees to 5 degrees), and the first surface 211 of the first housing 210 and the second surface 221 of the second housing 220 may face each other.

The processor 120 may display the first user interface 910 on the second display 240 in a folded state of the foldable electronic device 101. The first user interface 910 may include a (1-1)th screen 911 for configuring a visual cue by selecting at least one content (e.g., a web page) and a (1-2)th screen 913 for displaying the visual cue on the selected content. The processor 120 may detect a user input 901 to select (e.g., long press) at least one content (e.g., a web page) on the (1-1)th screen 911. When the user input 901 is determined as a designated user input (e.g., a long press and then a drag and drop), the processor 120 may provide the (1-2)th screen 913 displaying a visual cue 915 corresponding to the selected content and displaying visual cue information 917.

The processor 120 may display a second user interface 920 on the second display 240 when the foldable electronic device 101 is in the folded state. The second user interface 920 may include a (2-1)th screen 921 for configuring a visual cue by selecting at least one content (e.g., a photo) in the web page, a (2-2)th screen 924 for providing a drag affordance 927 corresponding to the content, and a (2-3)th screen 929 for displaying the visual cue on the selected content. The processor 120 may detect a user input 923 to select at least one content (e.g., a photo) on the (2-1)th screen 921. When the user input 923 is determined as a designated user input, the processor 120 may provide the (2-3)th screen 929 displaying a visual cue 928 corresponding to the selected content and displaying visual cue information 929.

The processor 120 may display a third user interface 930 according to a state change of the foldable electronic device 101. The processor 120 may determine whether the foldable electronic device 101 is changed from the folded state to an unfolded state by using a sensor module 176. The processor 120 may display the third user interface 930 on the first display 230 when the foldable electronic device 101 is in the unfolded state. The third user interface 930 may display content for which a visual cue has been most recently configured, and may display a visual cue 931 and visual cue information 933. The processor 120 may detect a user input 935 to view a recent list while displaying the third user interface 930. When the user input 935 to view the recent list is detected, the processor 120 may provide a fourth user interface 940. The fourth user interface 940 may display an execution screen of an application currently being executed.

In the fourth user interface 940, execution screens of the same application may be listed in a tab form, or execution screens of different applications may be listed. The execution screen of the application may include the second user interface 920 and the third user interface 930. The content for which the visual cue is configured in the second user interface 920 and the content for which the visual cue is configured in the third user interface 930 may be different applications. The execution screen of the application included in the fourth user interface 940 may include an execution screen of a first application for displaying a web page and an execution screen of a second application for displaying a photo. The processor 120 may display a first visual cue 943 corresponding to the execution screen of the first application and a second visual cue 941 corresponding to the execution screen of the second application.

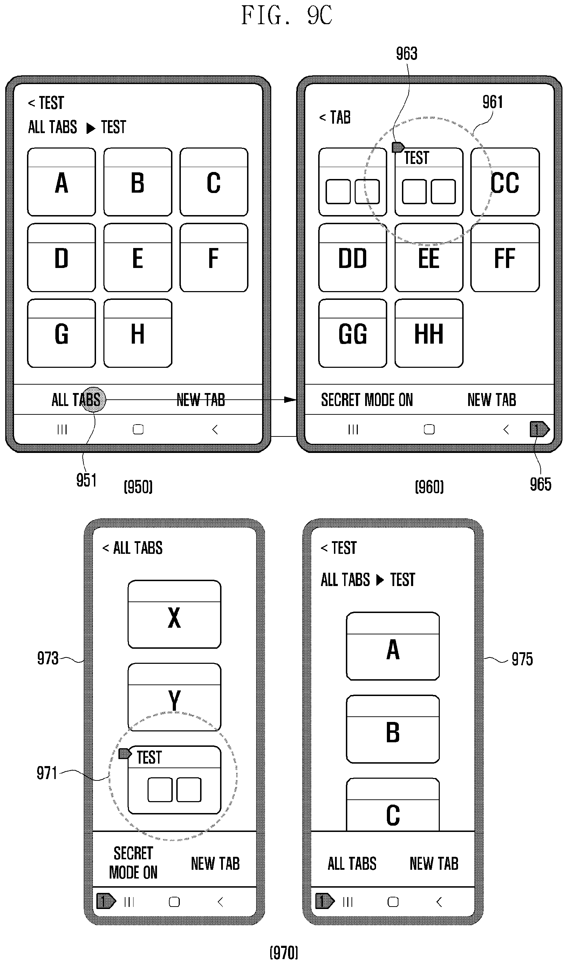

Referring to FIG. 9C, the processor 120 may display a fifth user interface 950 on the first display 230 when the foldable electronic device 101 is in the unfolded state. The fifth user interface 950 may include a plurality of contents. The processor 120 may detect a user input 951 to view all tabs while displaying the fifth user interface 950. When the user input 951 to view all tabs is detected, the processor 120 may provide a sixth user interface 960. The sixth user interface 960 may include a tab group including at least one tab and an activated tab. When a designated user input for at least one tap group 961 is detected, the processor 120 may provide a visual cue 963 for the tap group 961. The processor 120 may display visual cue information 965, based on the number of visual cues 963. The processor 120 may provide a preview of a tab selected by a user.

The processor 120 may display a seventh user interface 970 according to a state change of the foldable electronic device 101. The processor 120 may determine whether the foldable electronic device 101 is changed from the unfolded state to the folded state by using the sensor module 176. The processor 120 may display the seventh user interface 970 on the second display 240 when the foldable electronic device 101 is in the folded state. The seventh user interface 970 may include a (1-1)th screen 973 for selecting a content group 971 for which a visual cue is configured and a (1-2)th screen 975 for displaying each piece of content included in the selected content group. The processor 120 may detect a user input to select a content group (e.g., a tab group) 971 on the (1-1)th screen 973. When selected content is a content group including a plurality of contents, the processor 120 may display each piece of content included in the content group.

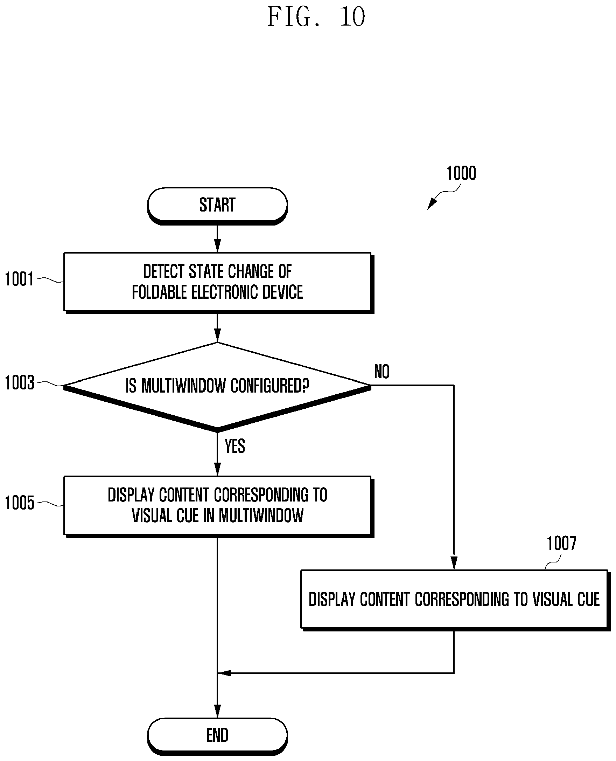

FIG. 10 is a flowchart 1000 illustrating a method of providing content in a multiwindow when a state of a foldable electronic device is changed according to an embodiment.

Referring to FIG. 10, in operation 1001, a processor (e.g., the processor 120 of FIG. 1) of a foldable electronic device (e.g., the electronic device 101 of FIG. 1) according to an embodiment may detect a state change of the foldable electronic device 101. The foldable electronic device 101 may include a first housing (e.g., the first housing 210 of FIG. 2A to FIG. 2C) including a first surface (e.g., the first surface 211 of FIG. 2A to FIG. 2C) and a third surface (e.g., the third surface 213 of FIG. 2A to FIG. 2C) and a second housing (e.g., the second housing 220 of FIG. 2A to FIG. 2C) including a second surface (e.g., the second surface 221 in FIG. 2A to FIG. 2C) and a fourth surface (e.g., the fourth surface 223 of FIG. 2A to FIG. 2C). A first display (e.g., the first display 230 of FIG. 2A to FIG. 2C) may be disposed on a front surface (e.g., the front surface 200 of FIG. 2A) of the foldable electronic device 101, and a second display (e.g., the second display 240 of FIG. 2A to FIG. 2C) may be disposed on one surface (e.g., the second surface 213) of a rear surface (e.g., the rear surface 250 of FIG. 2A) of the foldable electronic device 101.

The state change of the foldable electronic device 101 may be a change from a folded state to an unfolded state or a change from the unfolded state to the folded state. The folded state may refer to a bent state, a folding state, or a closed state (e.g., FIG. 2B). The folded state is a state in which the first housing 210 and the second housing 220 are disposed to face each other, and may refer to a state in which the foldable electronic device 101 is completely folded. In the folded state, the first housing 210 and the second housing 220 form a narrow angle (e.g., 0 degrees to 5 degrees), and the first surface 211 of the first housing 210 and the second surface 221 of the second housing 220 may face each other. The unfolded state is a state in which the first housing 210 and the second housing 220 are disposed side by side, and may refer to a state in which the foldable electronic device 101 is completely unfolded. In the unfolded state, the first housing 210 and the second housing 220 form an angle of 180 degrees, and the first surface 211 of the first housing 210 and the second surface 221 of the second housing 220 may be disposed to face the same direction (e.g., a first direction) (e.g., FIG. 2A).

In operation 1003, the processor 120 may determine whether a multiwindow is configured. The processor 120 may determine whether the multiwindow is configured as a priority in a configuration value of the foldable electronic device 101. The multiwindow refers to display of a plurality of windows, and a single application may be displayed in a single window. Accordingly, when two windows are displayed, two different applications may be displayed. The processor 120 may perform operation 1005 when the multiwindow is configured, and may perform operation 1007 when the multiwindow is not configured.

When the multiwindow is configured, the processor 120 may display content corresponding to a visual cue in the multiwindow in operation 1005. When there are at least two contents corresponding to visual cues, the processor 120 may display first content corresponding to a first visual cue in a first window, and may display second content corresponding to a second visual cue in a second window. For example, the processor 120 may display the multiwindow on the first display 230 when the foldable electronic device 101 is in the unfolded state.

When the multiwindow is not configured, the processor 120 may display content corresponding to a visual cue in the multiwindow in operation 1007. When there are at least two contents corresponding to visual cues, the processor 120 may display content for which a visual cue has been most recently configured. For example, the processor 120 may display the content corresponding to the visual cue on the first display 230 when the foldable electronic device 101 is in the unfolded state.

Operation 1003 to operation 1007 may be included to be performed in operation 409 of FIG. 4.

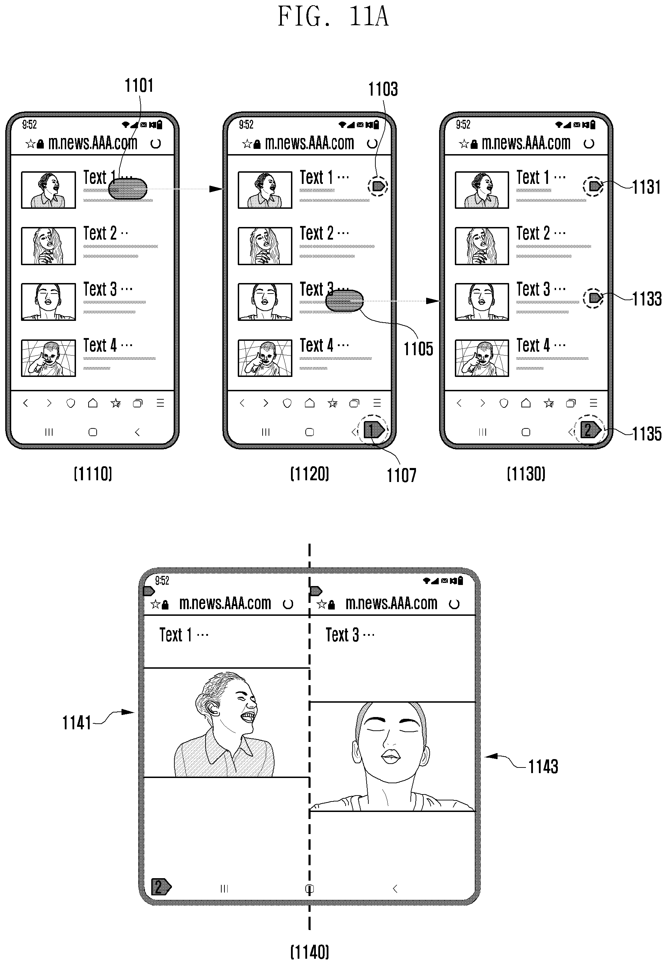

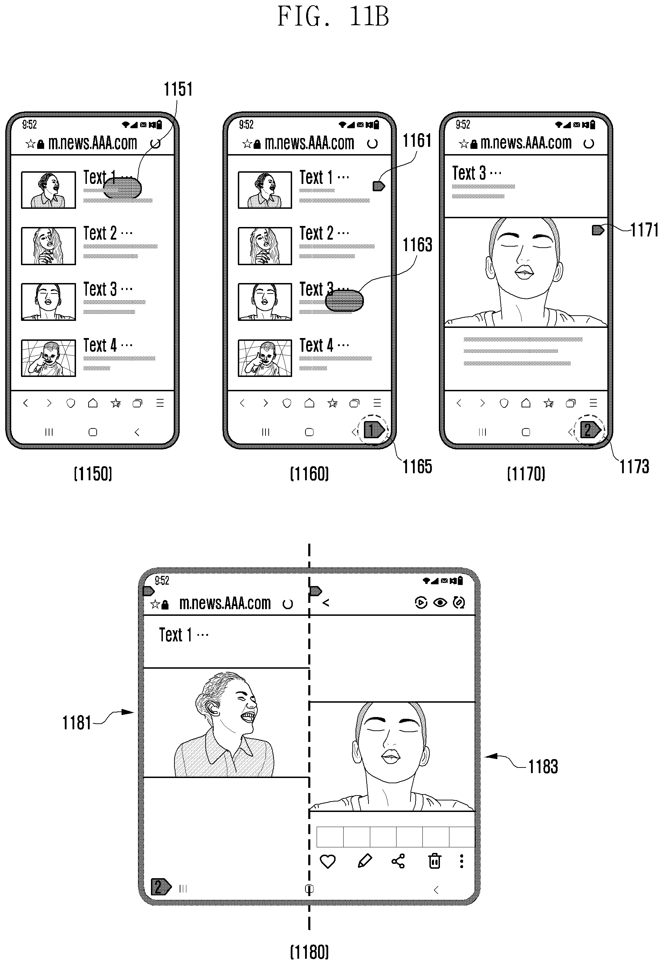

FIG. 11A and FIG. 11B illustrate an example of providing content in a multiwindow in a foldable electronic device according to an embodiment.

Referring to FIG. 11A, a processor (e.g., the processor 120 of FIG. 1) of a foldable electronic device (e.g., the electronic device 101 of FIG. 1) according to an embodiment may display a first user interface 1110 in a folded state. The foldable electronic device 101 may include a first housing (e.g., the first housing 210 of FIG. 2A to FIG. 2C) including a first surface (e.g., the first surface 211 of FIG. 2A to FIG. 2C) and a third surface (e.g., the third surface 213 of FIG. 2A to FIG. 2C) and a second housing (e.g., the second housing 220 of FIG. 2A to FIG. 2C) including a second surface (e.g., the second surface 221 in FIG. 2A to FIG. 2C) and a fourth surface (e.g., the fourth surface 223 of FIG. 2A to FIG. 2C). A first display (e.g., the first display 230 of FIG. 2A to FIG. 2C) may be disposed on a front surface (e.g., the front surface 200 of FIG. 2A) of the foldable electronic device 101, and a second display (e.g., the second display 240 of FIG. 2A to FIG. 2C) may be disposed on one surface (e.g., the second surface 213) of a rear surface (e.g., the rear surface 250 of FIG. 2A) of the foldable electronic device 101.

The folded state may refer to a bent state, a folding state, or a closed state (e.g., FIG. 2B). The folded state is a state in which the first housing 210 and the second housing 220 are disposed to face each other, and may refer to a state in which the foldable electronic device 101 is completely folded. In the folded state, the first housing 210 and the second housing 220 form a narrow angle (e.g., 0 degrees to 5 degrees), and the first surface 211 of the first housing 210 and the second surface 221 of the second housing 220 may face each other.

While displaying the first user interface 1110, the processor 120 may select (e.g., long press) at least one content, and may detect a user input 1101 designated for the selected content to configure a first visual cue. When the first visual cue is completely configured, the processor 120 may display a second user interface 1120 including the first visual cue 1103 and first visual cue information 1107. While displaying the second user interface 1120, the processor 120 may select (e.g., long press) at least one content, and may detect a user input 1105 designated for the selected content to configure a second visual cue. When the second visual cue is completely configured, the processor 120 may display a third user interface 1130 including the first visual cue 1131, the second visual cue 1133, and second visual cue information 1135. The first visual cue information 1107 may be '1', and the second visual cue information 1135 may be '2'.

The processor 120 may display a fourth user interface 1140 when the foldable electronic device 101 is changed from the folded state to an unfolded state. The unfolded state is a state in which the first housing 210 and the second housing 220 are disposed side by side, and may refer to a state in which the foldable electronic device 101 is completely unfolded. In the unfolded state, the first housing 210 and the second housing 220 form an angle of 180 degrees, and the first surface 211 of the first housing 210 and the second surface 221 of the second housing 220 may be disposed to face the same direction (e.g., a first direction) (e.g., FIG. 2A).

When the foldable electronic device 101 is configured to preferentially provide a multiwindow, the processor 120 may display the fourth user interface 1140 on the first display 230. The fourth user interface 1140 may include first content 1141 (e.g., a first web page) for which the first visual cue 1131 is configured and second content 1143 (e.g., a second web page) for which the second visual cue 1133 is configured.

Referring to FIG. 11B, the processor 120 may display a fifth user interface 1150 in the folded state. While displaying the fifth user interface 1150, the processor 120 may select (e.g., long press) at least one content (e.g., Text 1), and may detect a user input 1151 designated for the selected content to configure a third visual cue. When the third visual cue is completely configured, the processor 120 may display a sixth user interface 1160 including the third visual cue 1161 and third visual cue information 1165. While displaying the sixth user interface 1160, the processor 120 may select at least one content (e.g., Text 3), and may detect a user input 1163 designated for the selected content to configure a fourth visual cue. When the fourth visual cue is completely configured, the processor 120 may display a seventh user interface 1170 including the fourth visual cue 1171 and fourth visual cue information 1173. The third visual cue information 1165 may be '1', and the fourth visual cue information 1173 may be '2'. For reference, the content for which the third visual cue 1161 is configured may be a web page, and the content for which the fourth visual cue 1171 is configured may be an image.

The processor 120 may display an eighth user interface 1180 when the foldable electronic device 101 is changed from the folded state to the unfolded state. When the foldable electronic device 101 is configured to preferentially provide a multiwindow, the processor 120 may display the eighth user interface 1180 on the first display 230. The eighth user interface 1180 may include third content 1181 (e.g., the web page) for which the third visual cue 1161 is configured and fourth content 1183 (e.g., the image) for which the fourth visual cue 1171 is configured. The third content 1181 may be a first application for displaying the web page, and the fourth content 1183 may be a second application for displaying the image.

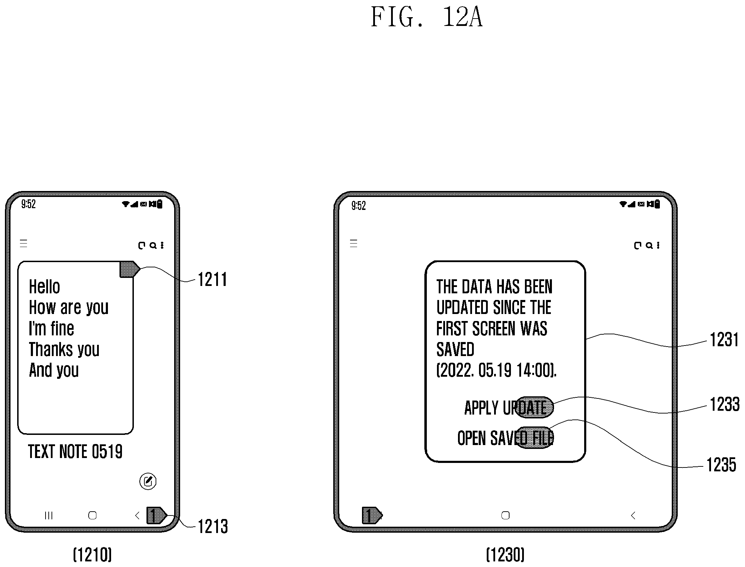

FIG. 12A to FIG. 12C illustrate an example of providing updated content in a foldable electronic device according to an embodiment.

Referring to FIG. 12A, a processor (e.g., the processor 120 of FIG. 1) of a foldable electronic device (e.g., the electronic device 101 of FIG. 1) according to an embodiment may display a first user interface 1210 in a folded state. The foldable electronic device 101 may include a first housing (e.g., the first housing 210 of FIG. 2A to FIG. 2C) including a first surface (e.g., the first surface 211 of FIG. 2A to FIG. 2C) and a third surface (e.g., the third surface 213 of FIG. 2A to FIG. 2C) and a second housing (e.g., the second housing 220 of FIG. 2A to FIG. 2C) including a second surface (e.g., the second surface 221 in FIG. 2A to FIG. 2C) and a fourth surface (e.g., the fourth surface 223 of FIG. 2A to FIG. 2C). A first display (e.g., the first display 230 of FIG. 2A to FIG. 2C) may be disposed on a front surface (e.g., the front surface 200 of FIG. 2A) of the foldable electronic device 101, and a second display (e.g., the second display 240 of FIG. 2A to FIG. 2C) may be disposed on one surface (e.g., the second surface 213) of a rear surface (e.g., the rear surface 250 of FIG. 2A) of the foldable electronic device 101.

The folded state may refer to a bent state, a folding state, or a closed state (e.g., FIG. 2B). The folded state is a state in which the first housing 210 and the second housing 220 are disposed to face each other, and may refer to a state in which the foldable electronic device 101 is completely folded. In the folded state, the first housing 210 and the second housing 220 form a narrow angle (e.g., 0 degrees to 5 degrees), and the first surface 211 of the first housing 210 and the second surface 221 of the second housing 220 may face each other.

The first user interface 1210 may include a first visual cue 1211 for selected content (e.g., a note application) and first visual cue information 1213. The selected content is editable by a user, and may be, for example, a note application. When the foldable electronic device 101 is changed from the folded state to an unfolded state, the processor 120 may display a second user interface 1220. The unfolded state is a state in which the first housing 210 and the second housing 220 are disposed side by side, and may refer to a state in which the foldable electronic device 101 is completely unfolded. In the unfolded state, the first housing 210 and the second housing 220 form an angle of 180 degrees, and the first surface 211 of the first housing 210 and the second surface 221 of the second housing 220 may be disposed to face the same direction (e.g., a first direction) (e.g., FIG. 2A).

When the content is updated after configuring the first visual cue 1211, the processor 120 may display the second user interface 1220. The second user interface 1120 may include guide information 1231 reporting a change of content, a first selection button 1233, and a second selection button 1235.

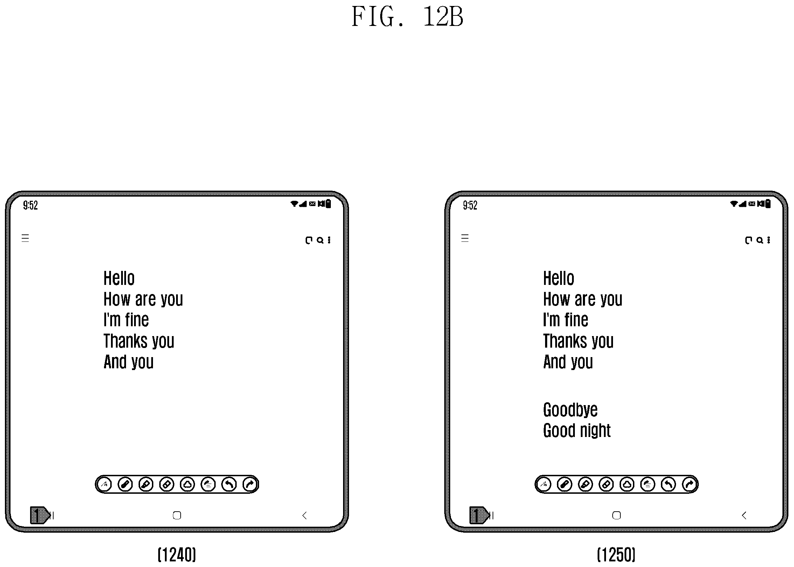

Referring to FIG. 12B, the processor 120 may provide a fourth user interface 1250 when the first selection button 1233 is selected by the user, and may provide a third user interface 1240 when the second selection button 1235 is selected by the user. The third user interface 1240 may include the content at a time when the visual cue is configured. The fourth user interface 1250 may include the updated content.

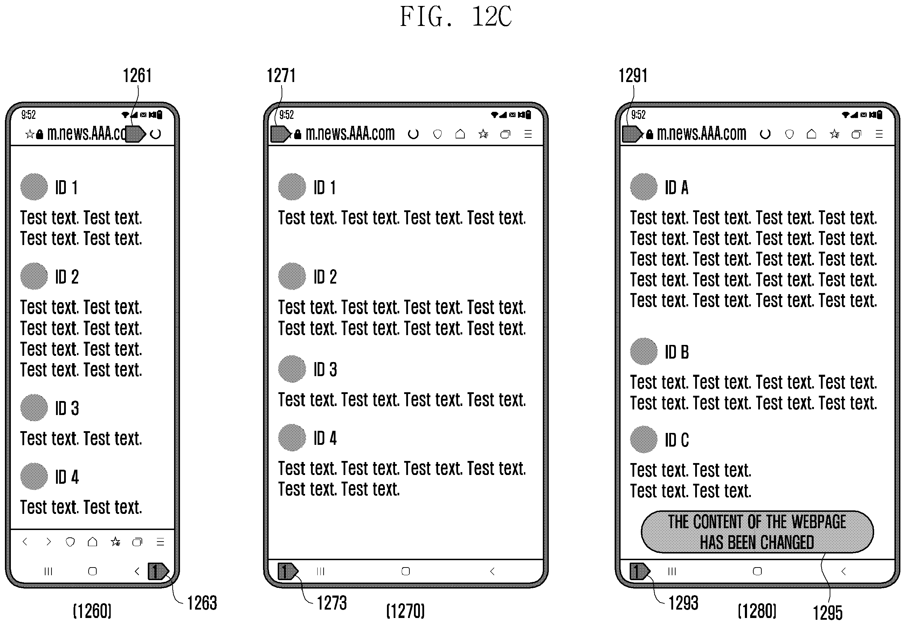

Referring to FIG. 12C, the processor 120 may display a fifth user interface 1260 in the folded state. The fifth user interface 1260 may include a second visual cue 1261 for selected content (e.g., a web page) and second visual cue information 1263. The selected content may be a web page. When the foldable electronic device 101 is changed from the folded state to the unfolded state, the processor 120 may display a sixth user interface 1270 or a seventh user interface 1280 on the first display 230. The content may be updated after the second visual cue 1261 is configured. The processor 120 may retrieve a portion for which the second visual cue 1261 is configured from the web page, and may display a sixth user interface 1270 on the first display 230. The sixth user interface 1270 may display the portion for which the second visual cue 1261 is configured in the updated web page, and may include a third visual cue 1271 and third visual cue information 1273.

Alternatively, when the portion for which the second visual cue 1261 is configured is not retrieved from the web page, the processor 120 may display the seventh user interface 1280 on the first display 230. The seventh user interface 1280 may include guide information 1295 reporting that the content for which the second visual cue 1261 is configured is not detected, a fourth visual cue 1291, and fourth visual cue information 1293.

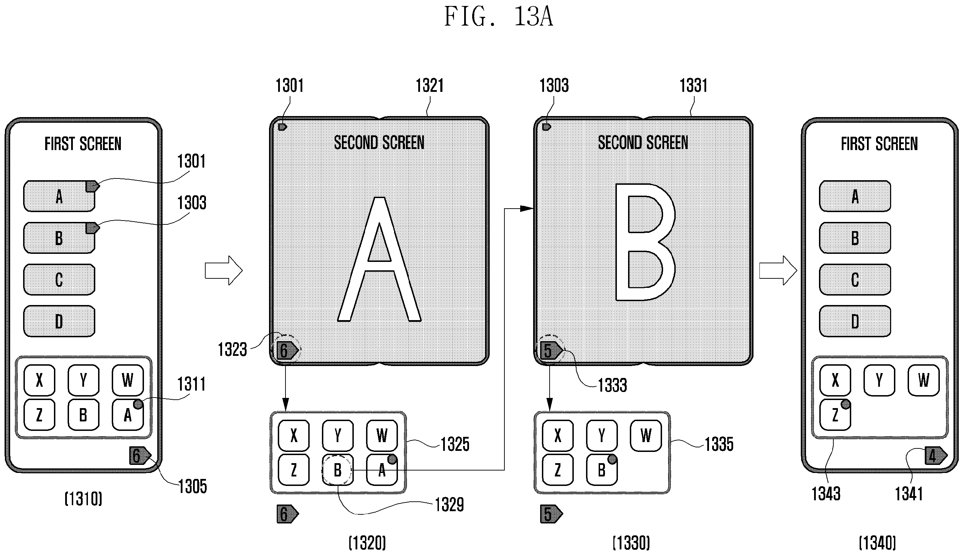

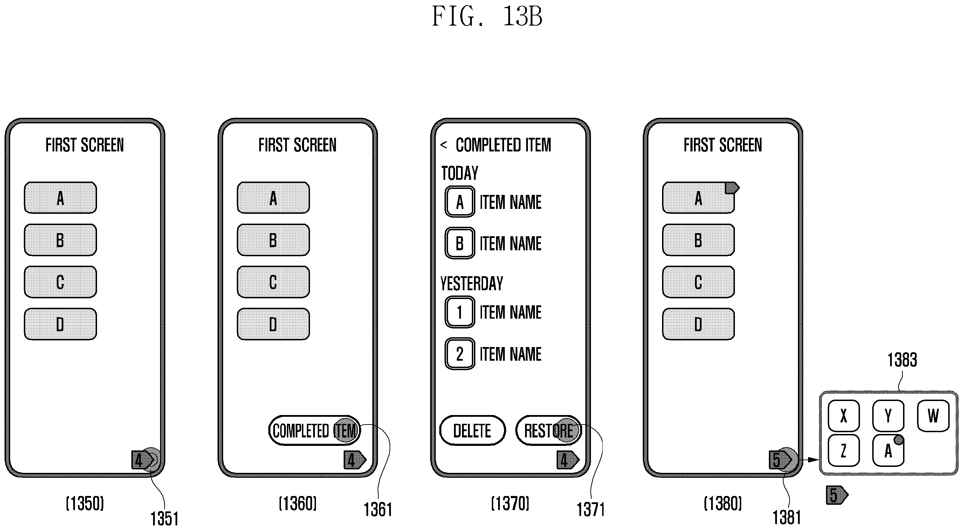

FIG. 13A and FIG. 13B illustrate an example of deleting displayed content from a content list in a foldable electronic device according to an embodiment.

Referring to FIG. 13A, a processor (e.g., the processor 120 of FIG. 1) of a foldable electronic device (e.g., the electronic device 101 of FIG. 1) according to an exemplary embodiment may display a first user interface 1310 in a folded state. The foldable electronic device 101 may include a first housing (e.g., the first housing 210 of FIG. 2A to FIG. 2C) including a first surface (e.g., the first surface 211 of FIG. 2A to FIG. 2C) and a third surface (e.g., the third surface 213 of FIG. 2A to FIG. 2C) and a second housing (e.g., the second housing 220 of FIG. 2A to FIG. 2C) including a second surface (e.g., the second surface 221 in FIG. 2A to FIG. 2C) and a fourth surface (e.g., the fourth surface 223 of FIG. 2A to FIG. 2C). A first display (e.g., the first display 230 of FIG. 2A to FIG. 2C) may be disposed on a front surface (e.g., the front surface 200 of FIG. 2A) of the foldable electronic device 101, and a second display (e.g., the second display 240 of FIG. 2A to FIG. 2C) may be disposed on one surface (e.g., the second surface 213) of a rear surface (e.g., the rear surface 250 of FIG. 2A) of the foldable electronic device 101.

The folded state may refer to a bent state, a folding state, or a closed state (e.g., FIG. 2B). The folded state is a state in which the first housing 210 and the second housing 220 are disposed to face each other, and may refer to a state in which the foldable electronic device 101 is completely folded. In the folded state, the first housing 210 and the second housing 220 form a narrow angle (e.g., 0 degrees to 5 degrees), and the first surface 211 of the first housing 210 and the second surface 221 of the second housing 220 may face each other.

The first user interface 1310 may include a first visual cue 1301 for first content, a second visual cue 1303 for second content, and first visual cue information 1305. When the first visual cue information 1305 is selected, the processor 120 may provide a first content list 1311. When the foldable electronic device 101 is changed from the folded state to an unfolded state, the processor 120 may display a second user interface 1320. The unfolded state is a state in which the first housing 210 and the second housing 220 are disposed side by side, and may refer to a state in which the foldable electronic device 101 is completely unfolded. In the unfolded state, the first housing 210 and the second housing 220 form an angle of 180 degrees, and the first surface 211 of the first housing 210 and the second surface 221 of the second housing 220 may be disposed to face the same direction (e.g., a first direction) (e.g., FIG. 2A).

The second user interface 1320 may display the first content 1321, the first visual cue 1301, and second visual cue information 1323. When the second visual cue information 1323 is selected, the processor 120 may provide a second content list 1325. When a user selects the second content 1329 in the second content list 1325, the processor 120 may provide a third user interface 1330. The third user interface 1330 may display the second content 1331, the second visual cue 1303, and third visual cue information 1333. Since the third user interface 1330 is provided after the user identifies the first content 1321, the visual cue corresponding to the first content 1321 may be deleted. The third visual cue information 1333 may be identified as having decreased from 6 to 5. When the third visual cue information 1333 is selected, the processor 120 may provide a third content list 1335. Referring to the third content list 1335, the first content 1321 (A) has been deleted. After a state change of the foldable electronic device 101, when content for which a visual cue is configured is identified (e.g., displayed), the processor 120 may delete the displayed content from a content list.

When the foldable electronic device 101 is changed from the unfolded state to the folded state, the processor 120 may display a fourth user interface 1340 on the second display 240. The fourth user interface 1340 may include fourth visual cue information 1341. When the fourth visual cue information 1341 is selected, the processor 120 may provide a fourth content list 1343. Referring to the fourth content list 1343, the first content 1321 (A) and the second content 1331 (B) have been deleted.

Referring to FIG. 13B, the processor 120 may display a fifth user interface 1350 including fifth visual cue information 1351. The first content 1321 (A) and the second content 1331 (B) may have been deleted from the fifth user interface 1350 as in the fourth user interface 1340. When the fifth visual cue information 1351 is selected, the processor 120 may display a sixth user interface 1360. The sixth user interface 1360 may include a completed item menu 1361 for content with a visual cue configured. When the completed item menu 1361 is selected, the processor 120 may display a seventh user interface 1370. The seventh user interface 1370 may include a list of content identified by the user after the state change of the foldable electronic device 101. When content to be restored is selected in the seventh user interface 1370 and then a restore button 1371 is selected, the processor 120 may display an eighth user interface 1380. The eighth user interface 1380 may display a visual cue corresponding to the content (A) of which restoration is requested and sixth visual cue information 1381. When the sixth visual cue information 1381 is selected, the processor 120 may display a fifth content list 1383. Referring to the fifth content list 1383, the content (A) has been restored to be included in the fifth content list 1383. Since the restored content (A) among the contents included in the fifth content list 1383 is the most recent, a display priority (e.g., an item to be displayed on a different screen) may be marked on the restored content (A).

An operating method of a foldable electronic device 101 including a first housing 210 and a second housing 220 disposed on opposite sides with respect to one folding axis and formed to be folded to each other according to an embodiment of the disclosure may include displaying a user interface on a second display 240 disposed to face a second direction, which is an opposite direction of a first direction of any one of the first housing or the second housing, in a folded state of the foldable electronic device; detecting a user input designated for content included in the user interface; displaying a visual cue corresponding to the content for which the user input is detected; detecting whether the foldable electronic device is changed from the folded state of to an unfolded state by using a sensor module 176 of the electronic device; and displaying the content corresponding to the visual cue on a first display 230 disposed to face the first direction of the first housing and the second housing when a state change of the foldable electronic device is completed.

The displaying of the visual cue may include displaying visual cue information corresponding to the visual cue, and the visual cue information may indicate a number of contents for which the visual cue is configured and may be changed to be displayed when a number of the visual cue is changed.

The displaying of the visual cue may include changing and displaying the visual cue information when a second visual cue is configured for new content in a state in which a first visual cue is configured.

The method may further include displaying a content list including at least one content for which the visual cue is configured when the visual cue information is selected.

The method may further include detecting a user input for content included in the content list, and modifying the content list, based on the detected user input.

The displaying of the content may include allocating a display priority for content configured based on time when there is a plurality of contents for which the visual cue is configured, and displaying the content for which the display priority is allocated among the contents for which the visual cue is configured when the state change of the foldable electronic device is completed.

The displaying of the content may include determining whether a multiwindow priority is configured in a configuration value of the foldable electronic device, and displaying the content corresponding to the visual cue in a multiwindow on the first display when the multiwindow priority is configured.

The displaying of the content in the multiwindow may include displaying the same application for which the visual cue is configured in the multiwindow, or displaying different applications for which the visual cue is configured in the multiwindow.

The detecting of the designated user input may include providing a drag affordance corresponding to the selected content when a user input to select the content is detected, and determining that a designated user input is entered when a user input to move the drag affordance to a designated area is detected.

The method may further include detecting whether the foldable electronic device is changed from the unfolded state to the folded state after displaying the content corresponding to the visual cue on the first display, and changing visual cue information corresponding to the visual cue when the foldable electronic device changes from the unfolded state to the folded state.

Various embodiments of the disclosure disclosed in the specification and drawings are only intended to provide specific examples for easily describing the technical content of the disclosure and for assisting understanding of the disclosure, and are not intended to limit the scope of the disclosure. Therefore, it should be interpreted that the scope of the disclosure includes all changes or modifications derived based on the technical idea of the disclosure in addition to the embodiments disclosed herein.

## Claims

1. A foldable electronic device (101) comprising:
a first housing (210) and a second housing (220) configured to be disposed on opposite sides with respect to a folding axis and formed to be foldable with respect to each other between a folded state and an unfolded state of the foldable electronic device;
a first display (230) configured to be disposed to face a first direction when the foldable electronic device is in the unfolded state;
a second display (240) configured to be disposed to face a second direction, which is an opposite direction to the first direction, when the foldable electronic device is in the unfolded state;
a sensor module (176);
and
a processor (120) configured to be operatively connected to the first display, the second display, and the sensor module,
wherein the processor is configured to:
display a user interface on the second display in the folded state of the foldable electronic device;
detect a user input designated for content included (e.g. displayed and/or indicated) in the user interface;
display a visual cue corresponding to the content for which the user input is detected;
detect whether the foldable electronic device is changed from the folded state to the unfolded state by using the sensor module; and
display content corresponding to the visual cue on the first display in response to detecting that the foldable electronic device is changed from the folded state to the unfolded state.

2. The foldable electronic device of claim 1, wherein the processor is configured to display visual cue information corresponding to the visual cue, and
wherein the visual cue information indicates a number of contents for which the visual cue is configured.

3. The foldable electronic device of claim 2, wherein the processor is configured to change and display the visual cue information in case that a second visual cue is configured for new content in a state in which a first visual cue is configured.

4. The foldable electronic device of claim 2, wherein the processor is configured to display a content list comprising at least one content for which the visual cue is configured in case that the visual cue information is selected.

5. The foldable electronic device of claim 4, wherein the processor is configured to:
detect a user input for content included in the content list; and
modify the content list, based on the detected user input.

6. The foldable electronic device of any preceding claim, wherein the processor is configured to:
allocate a display priority for content configured based on time in case that there is a plurality of contents for which the visual cue is configured; and
display the content for which the display priority is allocated among the contents for which the visual cue is configured in case that the state change of the foldable electronic device from the folded state to the unfolded state is completed.

7. The foldable electronic device of any preceding claim, wherein the processor is configured to:
determine whether a multiwindow priority is configured in a configuration value of the foldable electronic device; and
display the content corresponding to the visual cue in a multiwindow on the first display in case that the multiwindow priority is configured.

8. The foldable electronic device of claim 7, wherein the processor is configured to:
display the same application for which the visual cue is configured in the multiwindow; or
display different applications for which the visual cue is configured in the multiwindow.

9. The foldable electronic device of any preceding claim, wherein the processor is configured to:
provide a drag affordance corresponding to the selected content in case that a user input to select the content is detected; and
determine that a designated user input is entered in case that a user input to move the drag affordance to a designated area is detected.

10. The foldable electronic device of any preceding claim, wherein the processor is configured to:
detect whether the foldable electronic device is changed from the unfolded state to the folded state after displaying the content corresponding to the visual cue on the first display; and
change visual cue information corresponding to the visual cue in case that the foldable electronic device changes from the unfolded state to the folded state.

11. An operating method of a foldable electronic device (101) comprising a first housing (210) and a second housing (220) disposed on opposite sides with respect to a folding axis and formed to be foldable with respect to each other between a folded state and an unfolded state of the foldable electronic device, the method comprising:
displaying a user interface on a second display (240) disposed to face a second direction in a folded state of the foldable electronic device;
detecting a user input designated for content included in the user interface;
displaying a visual cue corresponding to the content for which the user input is detected;
detecting whether the foldable electronic device is changed from the folded state to the unfolded state by using a sensor module (176) of the electronic device; and
displaying content corresponding to the visual cue on a first display (230) disposed to face a first direction, opposite to the second direction, in case that a state of the foldable electronic device is changed from the folded state to the unfolded state.

12. The method of claim 11, wherein the displaying of the visual cue comprises displaying visual cue information corresponding to the visual cue, and
wherein the visual cue information indicates a number of contents for which the visual cue is configured and is changed to be displayed in case that a number of the visual cue is changed.

13. The method of claim 12, wherein the displaying of the visual cue comprises changing and displaying the visual cue information in case that a second visual cue is configured for new content in a state in which a first visual cue is configured.

14. The method of claim 12, further comprising displaying a content list comprising at least one content for which the visual cue is configured in case that the visual cue information is selected.

15. The method of claim 14, further comprising:
detecting a user input for content included in the content list; and
modifying the content list, based on the detected user input.
